(19) Europäisches Patentamt
European Patent Office
Office européen des brevets

(11) **EP 1 191 287 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(51) Int Cl.:
***F24D 19/10*** *(2006.01)*

(21) Anmeldenummer: **01121721.3**

(22) Anmeldetag: **18.09.2001**

(54) **Leitungssystem zur thermischen Energieübertragung**

Pipe system for thermal energy exchange

Système de tuyauterie pour l'échange d'énergie thermique

(84) Benannte Vertragsstaaten:
**AT BE CH CY DE DK ES FI FR GB GR IE IT LI LU MC NL PT SE TR**

(30) Priorität: **20.09.2000 DE 10046862**

(43) Veröffentlichungstag der Anmeldung:
**27.03.2002 Patentblatt 2002/13**

(73) Patentinhaber: **KSB Aktiengesellschaft**
**67227 Frankenthal (DE)**

(72) Erfinder:
• **Illy, Alois**
**67117 Heidelberg (DE)**

• **Kracht, Petra**
**67069 Ludwigshafen (DE)**
• **Gröning, Norbert**
**67227 Frankenthal (DE)**
• **Hanewald, Dieter**
**67227 Frankenthal (DE)**
• **Flak, Stefan**
**67227 Frankenthal (DE)**

(56) Entgegenhaltungen:
**EP-A- 0 308 806      EP-A- 0 624 760**
**DE-A- 3 203 832      DE-A- 3 502 873**
**DE-A- 4 446 974**

**Beschreibung**

Die Erfindung betrifft ein Leitungssystem zur thermischen Energieübertragung unter Verwendung eines flüssigen Fluids, mindestens enthaltend eine Pumpe und einen Verbraucher, wobei zwischen einer Vorlaufleitung zum Verbraucher und einer Rücklaufleitung vom Verbraucher im Leitungssystem eine Bypassleitung angeordnet ist, durch die Bypassleitung im Leitungssystem eine Beeinflussung einer Vorlauftemperatur mittels Fluidbeimischung erfolgt, mindestens eine Stellarmatur im Leitungssystem angeordnet ist und ein Stellsignal eines Regel- oder Steuergerätes die Drosselstellung der Stellarmatur verändert.

Mit derartigen Leitungssystemen, die in Anlagen der Heizungs-, Klima- und Lüftungstechnik Verwendung finden, wird die Beibehaltung einer Temperatur in Räumen, Luft- oder Flüssigkeitsströmen gewährleistet. Zur Sicherstellung der Funktion sind im allgemeinen zwei getrennte Regelkreise vorhanden.

Ein erster Regelkreis stellt sicher, daß die benötigte Vorlauftemperatur zur Verfügung steht. Dieser erste Regelkreis besteht aus einem Regel- oder Steuergerät, bei einer Heizungsanlage gewöhnlich ein Heizungsregler, für die das Fluid aufheizenden oder kühlenden Bauteile und einer angetriebenen Stellarmatur. Bei Heizungsanlagen wird durch einen Einstellvorgang eine Kurve ermittelt, eine sogenannte Heizkurve, welche die im Leitungssystem benötigte Vorlauftemperatur regelt.

Im Rahmen des Einstellvorganges, der vor einer Inbetriebnahme des Leitungssystem stattfindet, wird auch der darin zirkulierende Volumenstrom mittels sogenannter Strangregulierventile einreguliert. Dabei werden vorhandene Verbraucher entsprechend der Auslegung auf den maximalen Durchfluß bzw. den Nenndurchfluß oder eine maximale Wärmeleistung bzw. eine Nennwärmeleistung eingestellt. Nach Abschluß der Einstellung erfolgt eine Versorgung der vorhandenen Verbraucher mit der notwendigen Vorlauftemperatur und dem notwendigen Volumenstrom. Es erfolgt also eine Versorgung mit der benötigten Wärmeleistung in Abhängigkeit von Einflußgrößen, bei einer Heizung gewöhnlich die Außentemperatur, bei neueren Anlagen auch durch zusätzliche Einflußgrößen, beispielsweise Wind, Bewölkung, Sonnenstand oder auch in Abhängigkeit von einem Referenzraum. Solche Einflußgrößen beeinflussen den Wärmebedarf eines Gesamtsystems in wesentlicher Weise.

Weiter wirken in einem solchen Leitungssystem ein oder mehrere zweite Regelkreise, bei einer Heiz- oder Klimaanlage meist eine Raumtemperaturregelung, welche sicherstellen, daß am Ort einzelner Verbraucher oder Verbrauchergruppen eine gewünschte Raumtemperatur eingehalten wird. Einen solchen zweiten Regelkreis bilden Regler und Stellorgane, häufig sogenannte thermostatische Heizkörperventile, welche als Baueinheit ausgebildet sind. Sie verändern bei Einwirkungen von Störgrößen, die zu Abweichungen vom eingestellten Sollwert führen, zum Beispiel bei einer zusätzlichen Wärmeeintragung in den Raum oder bei ähnlichen Einflußgrößen, den Volumenstrom in der Rohrleitung und passen damit die zu übertragende Wärmeleistung dem jeweiligen Bedarf an. An Stelle der thermostatischen Heizkörperventile können auch gesonderte und auf Stellarmaturen einwirkende Raumtemperaturregler vorgesehen werden.

In Anlagen mit nur einem Regelkreis wirkt ein Raumtemperaturregler direkt auf ein oder mehrere Stellarmaturen zwecks Beeinflussung der Vorlauftemperatur mittels Fluidbeimischung.

In den bekannten Anlagen erfolgt das Einregulieren eines Volumenstromes auf den berechneten Vollastfall. In einem ersten Schritt werden die Volumenströme für die einzelnen Verbraucher abgeglichen. Danach wird ein Strangregulierventil für einen abzugleichenden Rohrleitungsabschnitt, auch Strang genannt, solange verstellt, bis eine bei der Auslegung rechnerisch ermittelte und an der zugehörigen Pumpe eingestellte Sollförderhöhe dem hier benötigten Volumenstrom entspricht. In größeren Anlagen müssen hierzu manchmal über 100 Strangregulierventile eingeregelt werden. Aus der Praxis ist bekannt, daß ein solcher von Hand durchgeführter Aufwand häufig nicht betrieben wird und die Anlagen statt dessen durch die Einstellung größerer Pumpenförderhöhen betrieben werden. Für den Nutzer einer solchen Anlage bedeutet dies aber ein unnötiger Energieverbrauch.

Aber auch bei denjenigen Praxisfällen, bei denen der aufwendige Strangabgleich erfolgt und die bei der Auslegung rechnerisch ermittelte Pumpenförderhöhe eingestellt wird, kommt es zu einer Energieverschwendung durch die Eindrosselung mittels einer Strangregulierarmatur. Denn in der Auslegungsrechnung sind Sicherheitszuschläge enthalten, die aber nur bei einem Minimum von Ereignisfällen gerechtfertigt sind.

Die in solchen Transportsystemen üblicherweise verwendete Vorlauftemperaturregelung arbeitet bei annähernd konstantem Volumenstrom, der gewöhnlich erst dann verändert wird, wenn die im zweiten Regelkreis an einzelnen Verbrauchern angeordneten Regler und Stellorgane ansprechen. Ein solches Umwälzen eines annähernd konstant hohen Volumenstromes, welcher unabhängig von der Höhe der Vorlauftemperatur ist, stellt ebenfalls eine Energieverschwendung dar. Denn beim Betrieb im Teillastbereich der Vorlauftemperaturregelung, also bei relativ hohen Außentemperaturen, wird der gleiche Volumenstrom umgewälzt, wie im Vollastfall, also bei niedrigen Außentemperaturen. Eine solche Energieverschwendung findet insbesondere bei Anlagen statt, bei denen die Verbraucherregelkreise, vorstehend als zweiter Regelkreis bezeichnet, zum Beispiel in Form der thermostatischen Heizkörperventile, nur selten ansprechen. Denn da im Teillastbereich der Vorlauftemperaturregelung bei annähernd konstantem Volumenstrom die Temperaturdifferenzen des zirkulierenden Fluids zwischen Vorlauf und Rücklauf sehr gering ist, wird eine solche Anlage aus energie- und wärmetechnischer Sicht nicht optimal betrieben.

Bei Leitungssystemen gemäß dem Oberbegriff mit flüssigen Fluiden ist der Volumenstrom bzw. der Massenstrom proportional dem Volumenstrom, da die Dichte der Fluide praktisch gleich ist.

Durch die EP-A 0 282 886 ist ein Verfahren zum Steuern der Vorlauftemperatur des Arbeitsmittels einer Anlage zur Wärmeenergieübertragung, insbesondere zur Temperierung der Luft in einem geschlossenen Raum, bekannt. Um den möglicherweise zusätzlichen Verlust oder Zugewinn von Wärmeenergie durch nicht heiztechnische Installationen auszugleichen, wird gegenüber dem vorbekannten Stand der Technik kritisiert, daß zusätzliche Steuerungs- oder Regelgeräte verwendet werden müssen. Um Nebeneinflüsse zu berücksichtigen, wird ein Verfahren zum Steuern der Vorlauftemperatur angegeben. Diese sieht vor, daß der im Arbeitsmittelkreis verbrauchte Energiemengenstrom, bei dem es sich um eine errechnete Wärmeleistung handelt, gemessen und danach die Vorlauftemperatur im Arbeitsmittelkreis mit Hilfe eines anlagenspezifischen dreidimensionalen Kennlinienblockes bestimmt wird. Die Dimension dieses Kennlinienblockes ist durch die Vorlauf- und Rücklauftemperatur sowie den Umwälzmengenstrom des Arbeitsmittels der Anlage vorgegeben. Dazu wird, unter Verzicht auf die direkte Erfassung der Außentemperatur, das Temperaturgefälle zwischen einer Außentemperatur und einer Raumtemperatur verwendet. Jeder Laststufe wird gemäß einem Heizkurvendiagramm eine bestimmte Vorlauftemperatur zugeordnet. In der Schrift fehlt jede Aussage über die Art und den Umfang des für dieses System notwendigen Heizkurvendiagramms. Nachteilig ist hierbei, daß sich beim Absinken der Raumtemperatur, z. B. durch Dauerlüften mittels offener Fenster, die Temperaturdifferenz zwischen Vorlauf und Rücklauf und somit das Laststufenfeld, welches in Richtung auf eine höhere Vorlauftemperatur verschoben wird, vergrößert. Diese prinzipbedingte Anhebung der Vorlauftemperatur hat einen zusätzlichen und unkontrollierten Energieeintrag in das Heizungssystem zur Folge. Somit könnte bei hohen Außentemperaturen die Anlage unkontrolliert in den Vollastfall übergehen. Instabilitäten der Steuerung wären die Folge. Im Hinblick auf die gestellte Aufgabe einer Energieeinsparung besteht somit ein Widerspruch.

Aus der DE-C 43 12 150 ist ein Verfahren zum Einstellen der Förderleistung einer drehzahlgeregelten Umwälzpumpe in einem mit Ventilen ausgerüsteten Rohrsystem einer Temperieranlage bekannt. Dabei wird die Drehzahl des die Pumpe antreibenden Elektromotors von einem Regler geregelt, dem eine der Strömungsgeschwindigkeit eines im Rohrsystem der Temperieranlage bewegten Mediums proportionale elektrische Spannung als Eingangsgröße zugeführt wird. Die Umwälzpumpe wird nach Maßgabe einer oberhalb der sich bei vollständig geöffneten Ventilen einstellenden Rohrnetzkennlinie liegenden Regelkennlinie betrieben. Dem Regler werden als weitere Regelgrößen eine Außentemperatur und die entsprechend einer vorgegeben Kennlinie hier scheint die Heizkurvenkennlinie gemeint zu sein - von der Außentemperatur abhängige Vorlauftemperatur des Mediums im Rohrsystem aufgegeben. Die Vorlauftemperatur wird vom Regler unter Verschiebung der Kennlinie so lange geändert, bis die Umwälzpumpe mit einer oberhalb von 50 % ihrer maximalen Drehzahl liegenden, einem besten Wirkungsgrad entsprechenden Drehzahl betrieben wird.

Durch die Messung der Strömungsgeschwindigkeit des Wassers ergibt sich eine Regelgröße für die Drehzahl der Pumpe. Die Pumpe wird in einem Drehzahlbereich betrieben, in dem sie mit besten Wirkungsgrad arbeitet, wobei dieser Drehzahlbereich zwischen 50 und 75 % der maximalen Drehzahl liegt. Für diejenigen Fälle, in denen aufgrund der gemessenen Strömungsgeschwindigkeit im Rohrsystem die Drehzahl der Pumpe in einem ungünstigen Drehzahlbereich gelangen würde, senkt der Regler die Vorlauftemperatur über eine Verstellung des Mischventils. Primär erfolgt also eine Beeinflussung der Vorlauftemperatur über ein Mischventil und es wird, wenn diese nicht mehr ausreicht, als sekundäre Maßnahme eine Drehzahlveränderung der Pumpe vorgenommen. Als Folge davon reduziert sich der Widerstand innerhalb des Rohrsystems und die Strömungsgeschwindigkeit des Wassers steigt an, so daß die Drehzahl der Pumpe wieder erhöht wird. Mit der Wirkung, durch Veränderung der Vorlauftemperatur die Ventile der Verbraucher zu öffnen und damit die Strömungsgeschwindigkeit im System zu erhöhen, erfolgt eine ausschließliche Beeinflussung der Pumpendrehzahl.

Nachteilig ist bei dieser Lösung, daß das System unabhängig von der Außentemperatur immer die volle Menge umwälzt, solange auf die thermostatischen Heizkörperventile keine Störgrößen einwirken. Bei einem Betrieb der Heizung im ungestörten Teillastbereich wälzt die Pumpe auch hier einen unnötig hohen Volumenstrom um. Weiterhin hebt diese Regelung, zum Beispiel beim Dauerlüften mittels offener Fenster in einem Raum, die Vorlauftemperatur und die Pumpendrehzahl in unnötiger Weise an, wodurch eine Energieverschwendung erfolgt. Denn durch die Veränderung der Vorlauftemperatur verändern die thermostatischen Heizkörperventile ihre Stellung, obwohl von außen keine Störgrößen auf sie einwirken. Beim zusätzlichen Auftreten einer Störgröße reicht somit deren ohnehin begrenzter Stellbereich, üblich sind 2 Kelvin, für das Ausregeln der aufgetretenen Störgröße dann nicht mehr aus.

Der Erfindung liegt das Problem zugrunde, einen im Teillastbereich des Leitungssystems umgewälzten Volumenstrom zu reduzieren, die für den Betrieb notwendige Pumpenförderhöhe auf ein notwendiges Minimum zu reduzieren und zusätzlich das Einregulieren des Volumenstromes eines solchen Leitungssystems wesentlich zu vereinfachen.

Die Lösung dieser Aufgabe sieht vor, daß das Stellsignal oder ein Vorlauftemperatur-Sollwert des Regel- oder Steuergerätes in eine Betriebselektronik einfließt, daß die Betriebselektronik in Abhängigkeit vom Stellsignal oder dem Vorlauftemperatur-Sollwert des Regel- oder Steuergerätes Stellsignale für die Förderhöhe der drehzahlgeregelten Pumpe und für die Drosselstellung von mindestens einer motorisch angetriebenen Stellarmatur erzeugt und daß die Betriebselektronik ihre Stellsignale nach hinterlegten anlagenspezifischen Gesetzmäßigkeiten erzeugt.

Mit dieser Lösung kann eine wesentliche Energieeinsparung erreicht werden. Das Stellsignal oder der Vorlauftemperatur-Sollwert des übergeordneten Regel- oder Steuergerätes wird in der Betriebselektronik weiterverarbeitet, wodurch erstmals eine gezielte Einflußnahme auf die Volumenströme und auf die Pumpenförderhöhe in einem Leitungssystem möglich ist.

Eine weitere Lösung sieht hierzu vor, daß das Stellsignal des Regel- oder Steuergerätes und ein Vorlauftemperatur-Istwert in eine Betriebselektronik einfließt, daß die Betriebselektronik in Abhängigkeit vom Stellsignal oder dem Vorlauftemperatur-Sollwert des Regel- oder Steuergerätes Stellsignale für die Förderhöhe der drehzahlgeregelten Pumpe und für die Drosselstellung von mindestens einer motorisch angetriebenen Stellarmatur erzeugt und daß die Betriebselektronik ihre Stellsignale nach hinterlegten anlagenspezifischen Gesetzmäßigkeiten erzeugt. Durch die Verwendung des Stellsignals und des Vorlauftemperatur-Istwertes bzw. des Stellsignals und des Vorlauftemperatur-Sollwertes ist eine weitere Energieeinsparung beim Betrieb im Teillastbereich des Leitungssystems möglich.

Die Lösung dieser Aufgabe sieht auch ein Verfahren zur Einregulierung eines Leitungssystems nach dem Gattungsbegriff vor, wobei während eines Einstellvorganges die Eckpunkte von der Sollförderhöhe der drehzahlgeregelten Pumpe mit den zugehörigen Drosselstellungen der Stellarmatur sowie ein Punkt A2 der Anlagenkennlinie $R_0$ ohne Stellarmaturen ermittelt werden und daß aus den Eckpunkten C, E und dem Punkt A2 der Verlauf der Sollförderhöhe der Pumpe und der Drosselstellung der Stellarmatur gebildet wird, daß das vom Regel- oder Steuergerät erzeugte Signal durch eine Betriebselektronik in mehrere Stellsignale für eine drehzahlregelbare Pumpe und für ein oder mehrere Stellarmaturen umgewandelt wird und daß die in der Betriebselektronik abgelegte Verstellgesetzmäßigkeit der umgewandelten Stellsignale für Pumpenförderhöhe und Drosselstellung der Stellarmatur abgeleitet wird aus einer vorgegebenen Abhängigkeit der Volumenstromreduzierung vom Signal der Vorlauftemperatur oder vom Stellsignal des Regel- oder Steuergerätes.

Ausgestaltungen sehen hierzu vor, daß als anlagenspezifische Gesetzmäßigkeit eine Volumenstromreduzierung bedingende Systemsteuerkennlinie hinterlegt ist, wobei die Systemsteuerkennlinie die Zuordnung zwischen der Drosselstellung der motorisch angetriebenen Stellarmaturen und der zugehörigen Pumpenförderhöhe bildet. Die Systemsteuerkennlinie ist ein Linienzug aller Betriebspunkte des Leitungssystems, bei denen auf die Verbraucher keine Störgrößen einwirken. Mit dieser Lösung ergibt sich eine deutliche Einsparung an Pumpenantriebsenergie. So wird zum Beispiel bei einer Außentemperatur von etwa +5°C, welche etwa der mittleren Betriebsbedingung einer Heizperiode entspricht, der Wärmebedarf der Anlage mit etwa 50% des maximalen Wärmebedarfes angenommen. Bei einer Volumenstromreduzierung um 30 % sinkt der Energiebedarf der Pumpe auch um ca. 30 %. Zusätzlich sinkt deren Energiebedarf durch den niedrigen Widerstand, den die Umwälzung des geringeren Volumenstromes verursacht. Bei einem Volumenstrom von 70 % sinkt der Widerstand im Leitungssystem auf etwa 50 %. Das heißt die Pumpenförderhöhe kann auf etwa 50 % reduziert werden, woraus sich insgesamt eine theoretische Einsparung von 65 % des Energiebedarfes ergibt.

Gemäß einer weiteren Ausgestaltung der Erfindung bleibt die übertragbare Wärmemenge bei einer gezielten Volumenstromreduzierung durch eine kontrollierte Anhebung der Temperaturspreizung zwischen Vorlauf und Rücklauf annähernd gleich. Die Reduzierung der Wärmemenge spart Antriebsenergie. Der Wärmeverlust durch die geringfügig erhöhte Vorlauftemperatur wird durch den reduzierten Wärmeverlust infolge einer Rücklauftemperaturreduzierung in gleicher Größenordnung kompensiert. Und der im Mittel deutlich niedrigere Volumenstrom bedingt insgesamt einen geringeren Wärmeverlust des Leitungssystems, da die Wärmeübergangszahl infolge der niedrigen Strömungsgeschwindigkeit in der Rohrleitung abnimmt.

Die Systemsteuerkennlinie verläuft zwischen den zwei Grenz-Systemsteuerkennlinien und ist abhängig von den physikalischen Möglichkeiten der drehzahlgeregelten Pumpe, wie minimale Drehzahl, minimale Pumpenförderhöhe, günstiger Pumpenwirkungsgrad usw. sowie von den jeweiligen anlagenspezifischen Randbedingungen wie beispielsweise Mindestmenge oder Mindestdrücke. Für eine minimale Pumpenförderhöhe bildet die Anlagenkennlinie ohne motorisch angetriebene Stellarmatur plus dem Druckabfall über der motorisch angetriebenen Stellarmatur von der beim Nennvolumenstrom oder Maximalvolumenstrom eingestellten Drosselstellung eine minimale Grenz-Systemsteuerkennlinie. Und die zum Nennvolumenstrom oder Maximalvolumenstrom zugehörige konstant gehaltene Pumpenförderhöhe bildet eine maximale Grenz-Systemsteuerkennlinie.

Bei einer Inbetriebnahme generiert eine Initialisierungseinheit in Abhängigkeit von eingespeisten Volumenstromsignalen, zugehörigen Pumpenförderhöhen und einem Punkt einer Anlagenkennlinie bei voll geöffneter Stellarmatur sowie in Abhängigkeit von hinterlegten anlagenspezifischen Gesetzmäßigkeiten die Systemsteuerkennlinie S.

Damit ist als wesentlicher Vorteil die automatische, individuelle Einregulierung der Stellventile mit der notwendigen Autorität möglich. Bezogen auf den tatsächlichen Rohrleitungswiderstand der Anlage ist keine Eindrosselung durch eine Strangregulierarmatur mehr erforderlich. Damit entfällt der bei herkömmlichen Anlagen zu überwindende Rohrleitungswiderstand durch eine eingedrosselte Strangregulierarmatur. Statt dessen kann eine Strangregulierarmatur ersatzlos entfallen, wodurch die erforderliche Pumpenförderhöhe bei entsprechend niedriger wird. Als Folge davon kann in den meisten Fällen eine kleinere und sparsamere Pumpengröße Verwendung finden. Ein zusätzlicher Vorteil ergibt sich durch den Wegfall der bisher erforderlichen manuellen Einregulierung mittels der Strangregulierarmaturen.

Weitere Ausgestaltungen sind in den Unteransprüchen beschrieben. Insgesamt ergeben sich erhebliche Vorteile: Dies reicht von einem niedrigeren Geräuschniveau der Anlage durch den im Mittel niedrigeren Volumenstrom und die niedrigere Pumpenförderhöhe, über die Möglichkeit zur problemlosen Integration in die MSR-Technik herkömmlicher Anlagen, da die Schnittstelle zum Regel- und Steuergerät unverändert bleibt und ermöglicht eine problemlose Nachrüstung von Altanlagen. Letzteres wird ermöglicht durch die Weiterverarbeitung der Stellsignale bestehender Regel- und Steuergerät in der Betriebselektronik. Dabei wäre lediglich eine Anpassung der vorgegebenen Heizkurve erforderlich, die aber sehr einfach ist. Die notwendige Anhebung der Vorlauftemperatur kann von der Initialisierungseinheit oder durch externe Rechner ermittelt und somit die Heizkurve entsprechend korrigiert werden.

Der Bypass mit den darin angeordneten Armaturen kann gegenüber dem Vorlauf oder Rücklauf mit einen um ca. 3 Nennweiten kleineren Querschnitt als bei herkömmlichen Anlagen ausgeführt werden. Dies verringert den Platzbedarf im Bereich des Verteilers, da der Abstand zwischen Vor- und Rücklaufleitung kleiner wird, weil die im Bypass angeordneten Armaturen eine kleinere Baulänge haben.

In den Ansprüchen 17 bis 21 sind Verfahrensschritte zur Einregulierung und zum energiesparenden Betrieb eines solchen Leitungssystems beschrieben. In der Figurenbeschreibung wird darauf Bezug genommen.

In einer weiteren Ausgestaltung des Leitungssystems ist es auch möglich, ein Überschreiten des maximal möglichen Volumenstromes in allen Punkten der Systemsteuerkennlinie zu verhindern, da aufgrund der Volumenstrommeßeinheit ein Q-Signal permanent verfügbar ist. Dazu wird ein entsprechender Regelalgorithmus in der Betriebseinheit aktiviert. Diese Funktion ist dann sinnvoll, wenn anlagenseitig die Möglichkeit gegeben ist, unerwünschte Volumenstromerhöhungen durch einfache Eingriffe in die Anlage von nicht kompetenter Seite vorzunehmen. Dies verhindert eine unsachgemäße Verstellung.

Ausführungsbeispiele der Erfindung sind in Zeichnungen dargestellt und werden im folgenden näher beschrieben. Hierbei zeigen die

| Fig. 1 und 2 | als Stand der Technik Rohrleitungsschema von bekannten Leitungssystemen, die |
| Fig. 3 und 4 | Leitungssysteme mit einer neuen Regelungsart, die |
| Fig. 5 | eine Regelung einer lufttechnischen Anlage |
| Fig. 6 | ein Q-H-Diagramm mit der Darstellung der Einregulierung der Förderhöhe einer Pumpe beim Nenn- oder maximalen Förderstrom, die |
| Fig. 7 | ein Q-H-Diagramm mit der Darstellung der Einregulierung der Förderhöhe einer Pumpe bei minimalem Förderstrom, die |
| Fig. 8 | ein Wärmeleistungsdiagramm am Beispiel einer statischen Heizung mit der Darstellung der Volumenreduzierung und der Aufteilung des Volumenstromes auf Stellarmaturen gemäß Fig. 3, die |
| Fig. 9 | für eine Anlage gemäß Figur 3 ein Q-H-Diagramm mit der entsprechenden System-Steuerkennlinie und dem Druckabbau über den Stellarmaturen, die |
| Fig. 10 | ein Wärmeleistungsdiagramm am Beispiel einer statischen Heizung mit der Darstellung der Volumenreduzierung und der Aufteilung des Volumenstromes auf Stellarmaturen gemäß Fig. 4, die |
| Fig. 11 | für eine Anlage gemäß Figur 4 ein Q-H-Diagramm mit der entsprechenden System-Steuerkennlinie und dem Druckabbau über eine Stellarmatur, die |
| Fig. 12 | ein Q-H-Diagramm mit Grenz- Systemsteuerkennlinien und die |
| Fig. 13 und 14 | zeigen Q-H-Diagramme mit verschiedenen Pumpenregelkennlinien am Beispiel von Anlagen gemäß Fig. 3. |

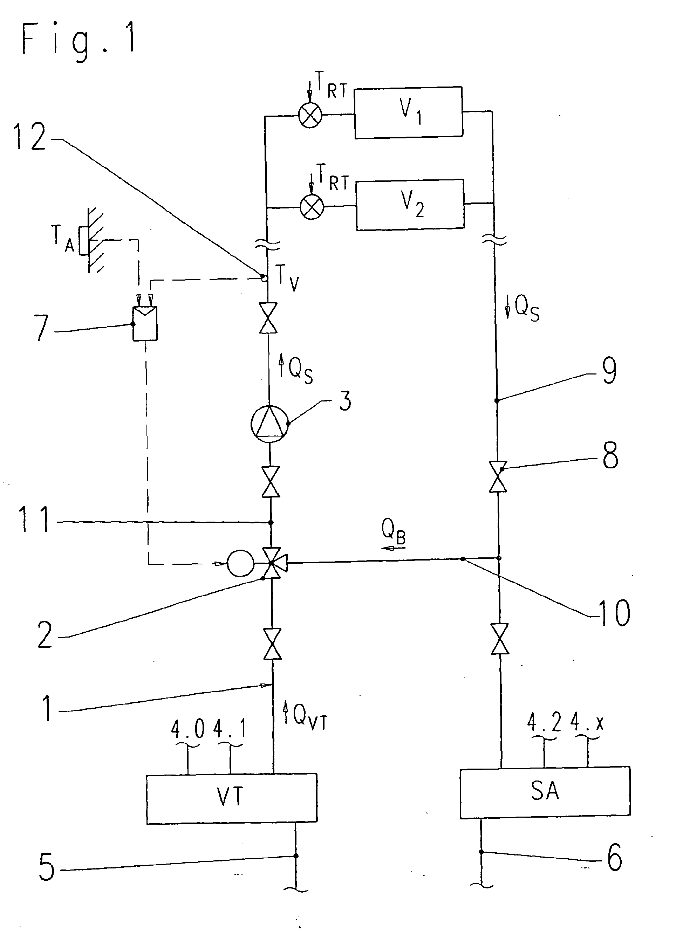

Die Figur 1 zeigt das Rohrleitungsschema eines Leitungssystems 1 nach dem Stand der Technik mit einer 3-Wege-Stellarmatur 2. Innerhalb des Leitungssystems 1 saugt eine Pumpe 3 aus einem Vorlaufverteiler VT ein umzuwälzendes Fluid an und fördert es durch die Verbraucher $V_1$, $V_2$, zurück zu einem Rücklaufsammler SA. Das dargestellte Rohrleitungsschema wird auch als ein sogenannter Strang bezeichnet. An Vorlaufverteiler VT und Rücklaufsammler SA sind schematisch mehrere Anschlüsse 4.0 bis 4.x für weitere Verbraucherstränge eingezeichnet. Das von der Pumpe 3 zu verteilende energiereiche Fluid fließt dem Vorlaufverteiler VT durch eine Zulaufleitung 5 zu, die mit einem - hier nicht dargestellten - Energieerzeuger, Fernwärmenetz oder ähnlichem verbunden ist, und wohin das energieärmere Fluid nach Durchströmen des Rücklaufsammlers SA über eine Rücklaufleitung 6 zurückfließt.

Ein erster Regelkreis sichert die Zurverfügungstellung der benötigten Vorlauftemperatur. Er besteht aus einem Regel- oder Steuergerät 7 und einer 3-Wege-Stellarmatur 2. Durch einen Einstellvorgang wird die sogenannte Heizkurve festgelegt, d.h. die benötigte Vorlauftemperatur in Abhängigkeit von der Außentemperatur oder auch anderen bzw. zusätzlichen Größen, die den Wärmebedarf der Gesamtanlage wesentlich beeinflussen, ermittelt. Diese Heizkurve ist im Regel- oder Steuergerät 7 hinterlegt und beeinflußt die 3-Wege-Stellarmatur 2. Bei Änderung der Einflußgrößen verändert das Regel- oder Steuergerät 7 entsprechend der Heizkurve die Vorlauftemperatur $T_V$.

Im Rahmen dieses Einstellvorganges wird auch der Nenn- oder maximale Volumenstrom $Q_{100}$ des Leitungssystems mittels sogenannter Strangregulierventile 8 einreguliert. Dabei werden die Verbraucher $V_1$, $V_2$ auf den maximalen Durchfluß bzw. auf den Nenndurchfluß eingestellt.

Der erste Regelkreis stellt mit dem Regel- oder Steuergerät 7, zu der jeweiligen Außentemperatur $T_A$ die entsprechend der Heizkurve benötigte Vorlauftemperatur $T_V$ ein. Dies erfolgt durch eine Verstellung der 3-Wege-Stellarmatur 2, wodurch mehr oder weniger energieärmeres Fluid vom Rücklauf 9 über einen Bypass 10 in den Vorlauf 11 geleitet und damit die Vorlauftemperatur $T_V$ im Leitungssystem verändert wird. Die Vorlauftemperatur $T_V$ stellt sich durch die Mischung des Volumenstromes $Q_{VT}$ aus dem Vorlaufverteiler VT mit einer hohen Temperatur und dem Volumenstrom $Q_B$ aus dem Bypass 10 ein, welcher nach Durchströmung der Verbraucher $V_1$, $V_2$ eine niedrigere Temperatur aufweist. Die tatsächliche Vorlauftemperatur $T_V$ erfaßt ein Temperaturfühler 12 und speist sie in das Regel- oder Steuergerät 7, welches hier als Heizungsregler ausgebildet ist, ein. Bei Abweichungen von dem durch die Heizkurve vorgegebenen Sollwert der Vorlauftemperatur $T_V$ verstellt das Regel- oder Steuergerät 7 die 3-Wege-Stellarmatur 2 solange, bis der von der Heizkurve vorgegebene Sollwert der Vorlauftemperatur wieder erreicht ist. Damit wird eine Unterversorgung von Verbrauchern mit maximalem Wärmebedarf verhindert, wenn andere Verbraucher im Teillastbereich arbeiten.

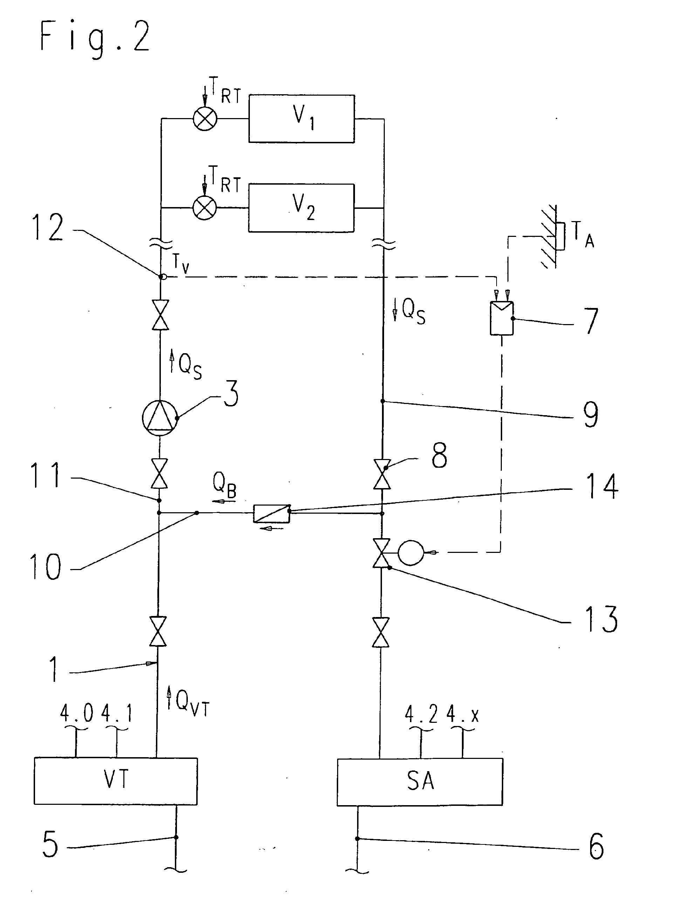

Der in Fig. 2 dargestellte Stand der Technik unterscheidet sich gegenüber der Ausführungsform von Fig. 1 durch eine andere Art der Beeinflussung der Bypassleitung 10. Anstelle einer 3-Wege-Stellarmatur findet hier eine im Rücklauf 9 angeordnete Stellarmatur 13 und eine im Bypass 10 angeordnete Rückschlagarmatur 14 Verwendung. Die regeltechnischen Abläufe gleichen einander.

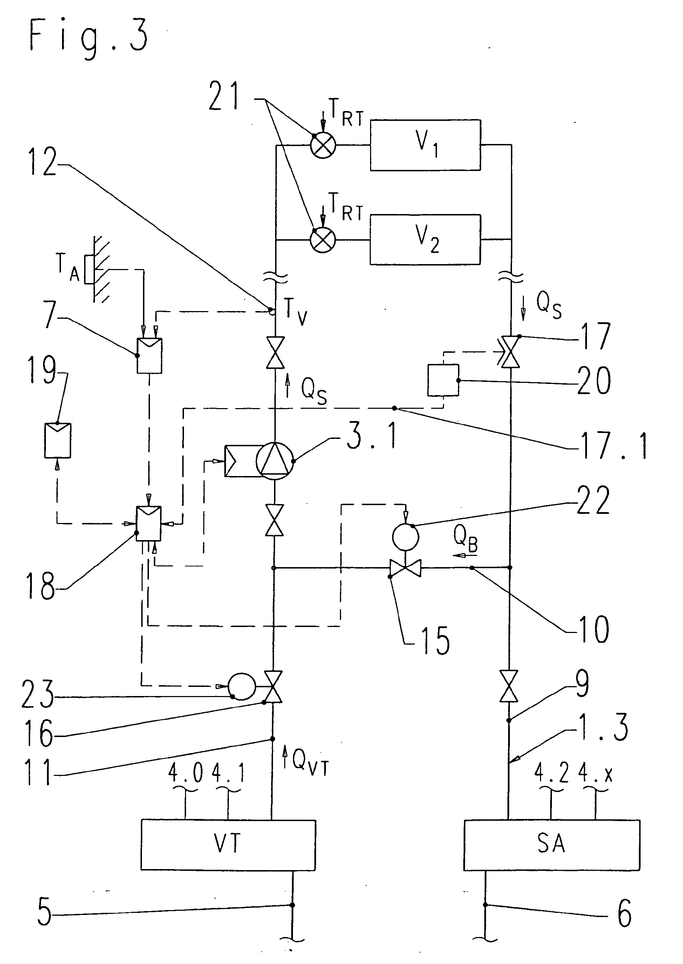

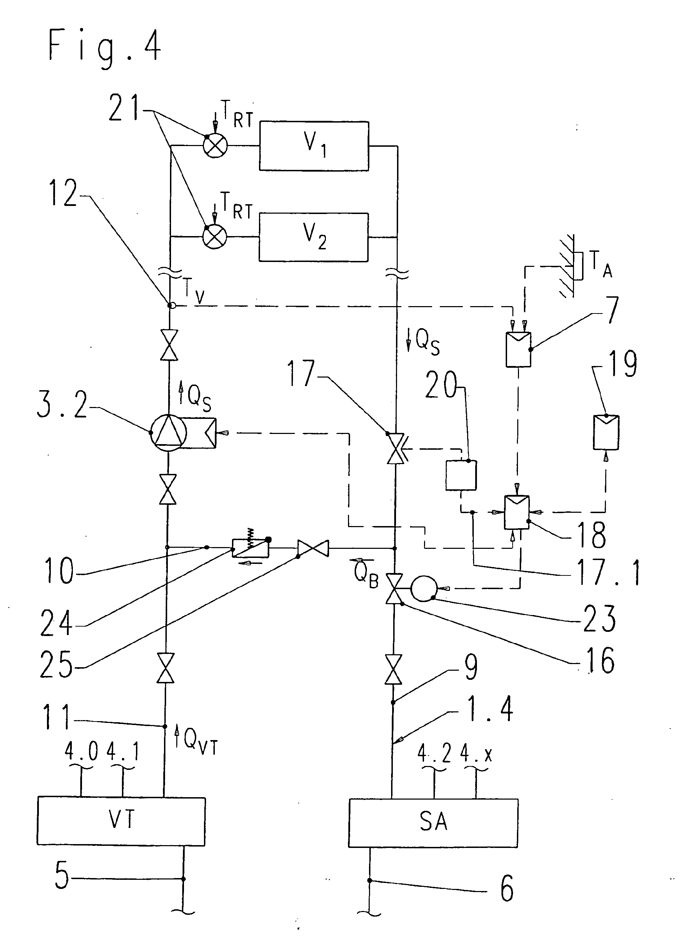

Die Darstellungen der Leitungssysteme 1.3 und 1.4 von den Fig. 3 und 4 sind erfindungsgemäße Weiterbildungen an Leitungssystemen 1, die vom Aufbau her den Ausführungsformen der Fig. 1 und 2 entsprechen. Die Vorlauftemperaturregelung in Fig. 3 und Fig. 4 besteht aus dem Regel- und Steuergerät 7 in gleicher Ausführung wie bei einer Anlage gemäß Fig. 1 und Fig. 2.

In Fig. 3 ist eine 3-Wege-Stellarmatur entfallen und statt dessen finden zwei motorisch betriebene Stellarmaturen 15, 16 Verwendung. Deren Einbauort ist nicht auf den in der Zeichnung dargestellten Ort beschränkt. Es sind alle Einbauorte zulässig, von denen aus durch die Wechselwirkung der beiden Stellarmaturen 15, 16 sich die gewünschte Beeinflussung der Vorlauftemperatur ergibt. Die Stellarmatur 15 ist hier im Bypass 10 angeordnet, während im Vorlauf 11 die Stellarmatur 16 angeordnet ist. Weiterhin verfügt das Leitungssystem 1.3 über eine Volumenstrommeßeinheit 17, die in eine Betriebselektronik 18 ein Volumenstromsignal 17.1 einspeist. Die Betriebselektronik 18 wirkt beim Einregulieren mit einer elektronischen Initialisierungseinheit 19 zusammen.

Das Stellsignal und/oder der Vorlauftemperatur-Sollwert des Regel- und Steuergerätes 7 bzw. ein Vorlauftemperatur-Istwert wirkt auf die Betriebselektronik 18. Die Betriebselektronik 18 erzeugt daraus Stellsignale für die Förderhöhe der drehzahlregelbaren Pumpe 3.1 und die Drosselstellung der Stellarmaturen 15, 16. In die Betriebselektronik 18 wird ein Volumenstromsignal 17.1 der Volumenstrommeßeinheit 17 geleitet, wobei deren Signal durch eine elektronische Auswerteeinheit 20 aufbereitet wird. Zwischen der Betriebselektronik 18, der Pumpe 3.1, gegebenenfalls auch den motorisch angetriebenen Stellarmaturen 15, 16 und der Initialisierungseinheit 19 erfolgt für Regel- und Einstellzwecke ein Datenaustausch.

Die vom Regel- oder Steuergerät 7 ausgeübten weiteren Funktionen, z.B. Kesselsteuerung, Nachtabsenkung usw, sind in diesem Zusammenhang nicht relevant.

Das Einregulieren des Leitungssystems 1.3 erfolgt mit Hilfe der Initialisierungseinheit 19. Sie ermittelt die Pumpenförderhöhe in Abhängigkeit vom Volumenstrom für alle Betriebspunkte sowie die Gesetzmäßigkeit der Hubverstellung der Stellarmaturen 15 und 16. Dies erfolgt automatisch und individuell für jede Anlage. Die ermittelten Gesetzmäßigkeiten werden dann von der Initialisierungseinheit 19 in der Betriebselektronik 18 abgelegt. Die Initialisierungseinheit 19 kann danach aus der Anlage entfernt bzw. entkoppelt werden. Es ist eine Frage der Herstellung und des Aufbaues, ob die Initialisierungseinheit 19 als eigenständiges Gerät oder als ein in die Regelanlage einzubauendes Bauteil ausgebildet ist.

Im einzelnen läuft der Vorgang der Einregulierung bei einem Leitungssystem 1.3 gemäß Fig.3 wie folgt ab:

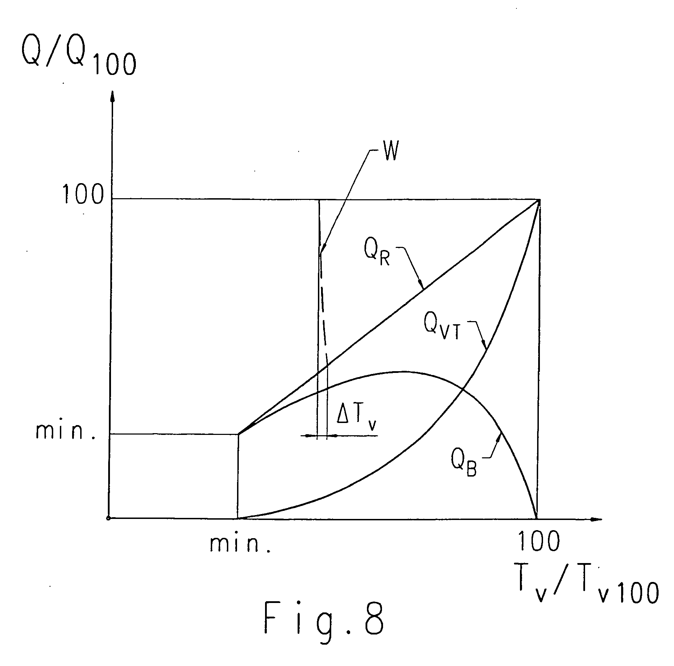

Die in diesem Leitungssystem 1.3 notwendige Volumenstromreduzierung wird in Abhängigkeit von den Kurven gleicher Wärmeleistung W und der bei der Auslegung zugrunde gelegten Vorlauftemperatur vorgegeben. Dies erfolgt gemäß einer Kurve $Q_R$ im Diagramm von Figur 8. Für die Volumenstromreduzierung sind die Art der verwendeten hydraulischen Schaltung des Leitungssystems, die Art der Verbraucher sowie entsprechende Erfahrungswerte zu berücksichtigen. Sollten keine Erfahrungswerte vorliegen, dann wird eine erste Annahme solange modifiziert, bis das Leitungssystem zufriedenstellend arbeitet.

Anhand der vorgegebenen Volumenstromreduzierung wird je nach verwendeten Verbraucher, zum Beispiel wurden der Fig. 8 statische Heizkörper und eine konstante Temperatur im Vorlaufverteiler VT zugrunde gelegt, die Volumenströme $Q_B$ für den von der Stellarmatur 15 beeinflußten Bypass 10 und die durch die Stellarmatur 16 beeinflußten Volumenströme $Q_{VT}$ mit Hilfe bekannter Gleichungen, zum Beispiel für die Wärmeleistung und Temperaturdifferenzberechnungen von Verbrauchern und Mischungsgleichungen für Wärmemengen, rechnerisch ermittelt. Zusätzlich kann die erforderliche Vorlauftemperatur-Anhebung $\Delta T_V$ gegenüber einem Rohrleitungssystem mit üblicher Vorlauftemperaturregelung sowie die Rücklauftemperaturabsenkung $\Delta T_R$ errechnet werden. Aus Vereinfachungsgründen ist es auch möglich, in der Initialisierungseinheit 19 die Volumenstromreduzierung $Q_R$ und die Aufteilung der Teilströme $Q_{VT}$ und $Q_B$ für Standardanlagen abzulegen.

Durch Festlegung des reduzierten Volumenstromes $Q_R$ für das Leitungssystem 1.3 und der zugehörigen Vorlauftemperatur $T_V$ sowie der Temperaturspreizung $\Delta T$, wobei es sich um die Temperaturdifferenz zwischen Vorlauf- und Rücklauftemperatur handelt, ist die Wärmeleistung der Anlage bzw. des Leitungssystems definiert. Das Regel- oder Steuergerät 7 ordnet die benötigte Vorlauftemperatur $T_V$, die zur Versorgung der Verbraucher $V_1$, $V_2$ mit der notwendigen Wärmeleistung erforderlich ist, mittels der an eine individuelle Anlage angepaßten Heizkurve in Abhängigkeit von der Außentemperatur $T_A$ in der Regel mittels eines Stellsignales zu. Solche Heizkurven werden in ein Regel- oder Steuergerät 7 auf verschiedene bekannte Weisen eingegeben bzw. an einen Leitungssystem angepaßt. Die Möglichkeit der Berechnung der erforderlichen Vorlauftemperaturanhebung gegenüber volumenkonstanten System kann genutzt werden, um eine Heizekurve für das erfindungsgemäße Leitungssystem und aufbauend auf der Erfahrung mit den heute üblichen Systemen, wesentlich schneller und einfacher einzustellen.

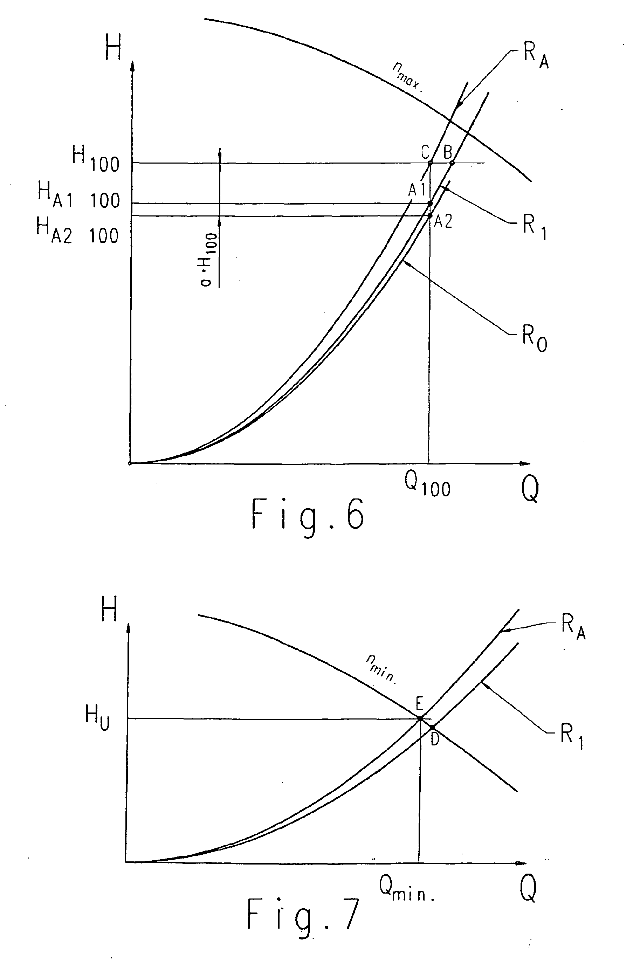

Ein weiterer Schritt stellt die Einregulierung des Nennvolumenstromes bzw. des maximalen Volumenstromes $Q_{100}$ und der zugehörigen Pumpenförderhöhe $H_{100}$ an der drehzahlregelbaren Pumpe 3.1 dar. Dies erfolgt gemäß den Darstellungen im QH-Diagramm von Fig. 6. Dazu werden die Verbraucher $V_1$, $V_2$ auf die Nennlast beziehungsweise auf die Vollast abgeglichen. $Q_{100}$ und die Nennweite der Stellarmatur 16 werden in die Initialisierungseinheit 19 eingegeben. Mit Hilfe von Stellsignalen, die in der Initialisierungseinheit 19 erzeugt werden, wird davon, bzw. von der damit verbundenen Betriebselektronik 18 die Stellarmatur 16 geöffnet und die Stellarmatur 15 geschlossen. Im Anschluß daran wird die Pumpenförderhöhe H solange verändert, bis der maximale Volumenstrom $Q_{100}$ erreicht ist. Dies entspricht dem Punkt A1 bei der Pumpenförderhöhe $H_{A1\,100}$ von Fig. 6. Die Initialisierungseinheit 19 ermittelt die erforderliche Pumpenförderhöhe $H_{100}$ nach der Beziehung:

$$H_{100} = \frac{1}{1-a} \cdot H_{A2_{100}}$$

$$H_{A2_{100}} = H_{A1_{100}} - \zeta \cdot \rho \cdot \frac{v_{100}^2}{2}$$

wobei

$\alpha$ = *Autorität der Stellarmatur*

$v_{100}$ = *Strömungsgeschwindigkeit, bezogen auf die Nennweite der Stellarmatur*

$\zeta$ = *Widerstandsbeiwert Zeta der Stellarmatur in Offenstellung*

$\rho$ = *Dichte Rho des Fluids*

$H_{A1_{100}}$ = *Druckverlust des Rohrleitungssystems einschließlich Stellarmatur bei $Q_{100}$.*

$H_{A2_{100}}$ = *Druckverlust des Rohrleitungssystems ohne Stellarmatur bei $Q_{100}$.*

Die Autorität der Stellarmatur 16 liegt für die Beimischung eines Rücklauffluids bei etwa 5 bis 10%. Dieser Wert wird für typischen Anlagen in der Initialisierungseinheit gespeichert, es ist aber möglich, ihn individuell anzupassen. Als praktisch hat es sich auch erwiesen, die Zeta und/oder $K_V$-Werte der Stellarmaturen 15, 16 in der Initialisierungseinheit 19 zu speichern, da somit Eingabefehler vermieden werden.

Mit Hilfe der Initialisierungseinheit 19 wird der Förderhöhensollwert der Pumpe 3.1 auf $H_{100}$ eingestellt. Gemäß dem Q-H-Diagramm von Fig. 6 wandert der Betriebspunkt der Pumpe 3.1 auf der Anlagenkennlinie $R_1$ mit geöffneter Stellarmatur 16 in den Betriebspunkt B. Um wieder den notwendigen Nennvolumenstrom $Q_{100}$ zu erhalten, wird von der Initialisierungseinheit 19 die Stellarmatur 16 so lange gedrosselt, bis der von der Pumpe 3.1 geförderte Volumenstrom $Q_{100}$ erreicht ist. Dies entspricht dem Punkt C auf der Anlagenkennlinie $R_A$ der Fig. 6. Für diesen Vorgang sind die Verbraucher $V_1$ und $V_2$ in dem Leitungssystem 1.3 auf den Nenn- bzw. Vollastfall eingestellt.

Dies gilt auch für den Fall der Einregulierung des minimalen Volumenstromes $Q_{min}$ mit der zugehörigen Pumpenförderhöhe $H_U$, wie es in Fig. 7 dargestellt ist. Die Kurven der Fig. 7 sind gegenüber denjenigen der Fig. 6 zwecks besserer Erkennung vergrößert dargestellt. Es handelt sich um einen Ausschnitt aus Fig. 6 im Bereich kleiner Förderhöhe und kleinem Volumenstrom. Von der Initialisierungseinheit 19 wird hierzu die im Bypass 10 befindliche Stellarmatur 15 geöffnet und die im Vorlauf 11 angeordnete Stellarmatur 16 geschlossen. Im Anschluß daran verändert die Initialisierungseinheit 19 die Pumpenförderhöhe der drehzahlregelbaren Pumpe 3.1 solange, bis der minimal mögliche Betriebspunkt D auf der Anlagenkennlinie $R_1$ mit geöffneter Stellarmatur 15 erreicht ist. Um den notwendigen minimalen Volumenstrom $Q_{min}$ zu erhalten, wird von der Initialisierungseinheit 19 die Stellarmatur solange verändert, bis der von der Pumpe 3.1 geförderte Volumenstrom auf $Q_{min}$ eingedrosselt ist. Dies entspricht dem Punkt E auf der Anlagenkennlinie RA mit einregulierter Stellarmatur. Der minimale Volumenstrom $Q_{min}$ ist als ein auf den maximalen Volumenstrom $Q_{100}$ bezogener, veränderbarer Faktor in der Initialisierungseinheit 19 abgelegt. Zum Beispiel wäre demnach $Q_{min} = 0,25 \times Q_{100}$.

Somit kann die minimale Förderhöhe durch die minimal mögliche Drehzahl der Pumpe, durch die minimal mögliche Förderhöhe der Pumpe, den minimalen Anlagendruck als auch durch den günstigsten Wirkungsgrad definiert sein.

Nach Ermittlung der Grenzwerte wird von der Initialisierungseinheit 19 die für das Leitungssystem 1.3 erforderliche Systemsteuerkennlinie und damit die Gesetzmäßigkeit für die Verstellung der Pumpenförderhöhe und der Drosselstellungen der Stellarmaturen 15, 16 generiert.

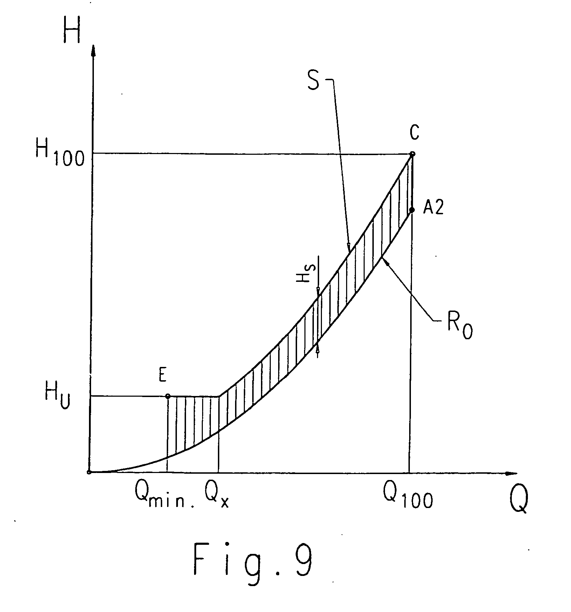

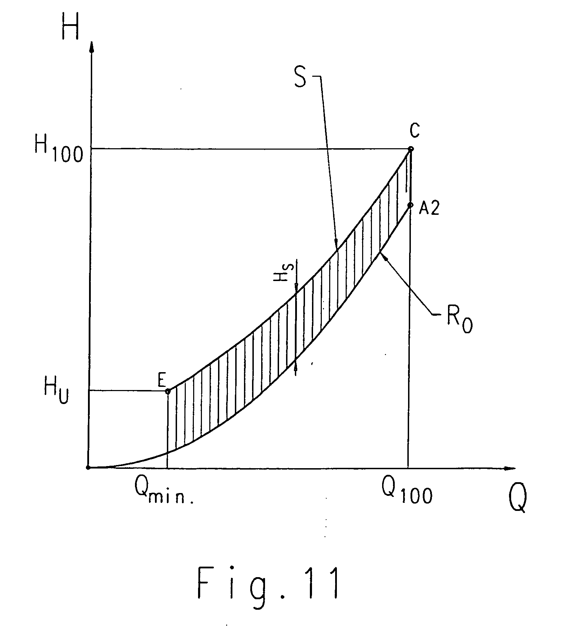

Die Initialisierungseinheit 19 bildet mit Hilfe der gemessenen Punkte C, E und dem errechneten Punkt A2 auf der Anlagenkennlinie $R_0$ ohne Stellarmatur die Systemsteuerkennlinie für das Leitungssystem, vergleiche Fig. 9 und 11.

Die Anlagenkennlinie $R_0$ ohne Stellarmatur wird bestimmt durch die Koordinaten $Q_{100}$ /$H_{A2\ 100}$ des Punktes A2 und der Gesetzmäßigkeit für den Druckabfall in Rohrsystemen. Bei turbulenter Strömung ist der Druckabfall proportional dem Quadrat der Strömungsgeschwindigkeit bzw. des Volumenstromes.

Bei der Systemsteuerkennlinie S handelt es sich im Q-H-Diagramm um einen Linienzug aller Betriebspunkte, bei dem die einen zweiten Regelkreis bildenden und den jeweiligen Verbrauchern zugeordneten Regelarmaturen 21 in ihrer Normalstellung stehen. Solche Regelarmaturen 21 sind in Heizungsanlagen meist als Thermostatventile ausgeführt. Normalstellung bedeutet in diesem Fall, daß auf die Verbraucher keine Störgrößen einwirken.

Die in Fig. 9 dargestellte Systemsteuerkennlinie S hat vorzugsweise einen Verlauf, der parallel zur Anlagenkennlinie $R_0$ ohne Stellarmaturen verläuft. Dieser Verlauf wurde aus Vereinfachungsgründen gewählt. Er hat zur Folge, daß der Druckabbau $H_S$ über die Stellarmaturen 15, 16 konstant ist, bis die Förderhöhe $H_0$ bei $Q_X$ erreicht ist. Zwischen den Werten $Q_X$ und dem minimalen Volumenstrom $Q_{min}$ wurde der Systemsteuerkennlinie S ein parallel zur Q-Achse ausgerichteter Verlauf gegeben. Die schraffiert dargestellte Fläche stellt den Druckabbau über die Stellarmaturen in Abhängigkeit von Volumenstrom Q dar. Punkt C ergibt sich, in dem zu dem Punkt A2 die Autorität a der Stellarmatur hinzu addiert wird. Durch die in der Initialisierungseinheit 19 im Rahmen des Einreguliervorganges bereits hinterlegte Kenntnis von der Lage der Punkte C und E im Q-H-Diagramm kann die für ein gegebenes Leitungssystem, hier 1.3, günstige Systemsteuerkennlinie sehr einfach ermittelt werden.

Aus dem Druckabbau über die Stellarmaturen 15, 16 und den ihnen zugeordneten jeweiligen Volumenströmen $Q_B$ und $Q_{VT}$ kann mit Hilfe der Dimensionierungsgleichung für Stellarmaturen

$$Q = K_V \cdot \sqrt{Hs}$$

und der Stellarmaturenkennlinie die zugehörige Drosselstellung der Stellarmaturen 15, 16 für jeden Betriebspunkt der Systemsteuerkennlinie ermittelt werden.

Bei üblichen Anlagen mit differenzdrucklosen Verteiler ist der Druckabbau über beide Stellarmaturen annähernd gleich. Gegebenenfalls wird ein zusätzliches Drosselorgan für den Abgleich vorgesehen. Der Druckabbau beträgt entsprechend der notwendigen Autorität etwa 5 bis 10 % des gesamten Druckabfalles im Rohrleitungssystem bzw. etwa 50% des Druckabfalles zwischen Verteiler VT und Sammler SA und der Einmündung der Bypassleitung in die Vorlaufleitung. Bezogen auf dieses meist sehr kurze Rohrleitungsstück sollte die Autorität somit relativ hoch sein.

Die bei der Einregulierung eines Leitungssystems mit Hilfe der Initialisierungseinheit 19 ermittelte Verstellgesetzmäßigkeit für die Pumpenförderhöhe und für die Stellung der Stellarmaturen 15, 16 wird nach Abschluß der Einstellarbeiten von der Initialisierungseinheit 19 auf die Betriebselektronik 18 übertragen und dort gespeichert. Nach Abschluß dieses Vorganges ist das jeweilige Leitungssystem 1.3 individuell einreguliert. Je nach Ausführungsform der Initialisierungseinheit 19, entweder als eigenständiges Gerät oder als Bauteil der Betriebselektronik 18, kann sie entweder entfernt oder von der Betriebselektronik entkoppelt werden. Im ersten Fall kann sie für weitere Optimierungen, z. B. von anderen Anlagen oder Leitungssystemen bzw. Strängen davon, verwendet werden. Bei einer einfachen Ausführungsform der Initialisierungseinheit, welche besonders kostengünstig ist, genügt es auch, sie einfach abzuschalten und in der Betriebselektronik zu belassen.

Eine die Einstellung eines Leitungssystems sehr vereinfachende Maßnahme ergibt sich, wenn in der Initialisierungseinheit Standardwerte für Standardanlagen festgelegt sind. In einem entsprechenden Datenspeicher der Initialisierungseinheit können Bereiche der möglichen Volumenstromreduzierung, bestimmte Ausführungen von Stellarmaturen und die Autorität dieser Stellarmaturen sowie verschiedene Verläufe von möglichen Systemsteuerkennlinien für Standardanlagen in standarisierter, normierter Form abgelegt werden. Nach Eingabe der in der jeweiligen Anlage Verwendung findenden Bauteile bzw. vorgegebenen Bedingungen kann die resultierende mit Hilfe externer Rechner ermittelte Verstellgesetzmäßigkeit der Pumpenförderhöhe und der Drosselstellung der Stellarmaturen für solche Standard-Anlagen immer gleich und direkt in der Initialisierungseinheit 19 gespeichert werden. Der Rechner der Initialisierungseinheit 19 hat dann lediglich die normierten Gesetzmäßigkeiten in absolute Werte abzuwandeln, welche dann in der in der Betriebselektronik 18 abgelegten Systemsteuerkennlinie Verwendung finden.

Die Funktionsweise eines solchen Regel- oder Steuersystems für die Vorlauftemperaturregelung ergibt sich bei in Normalstellung befindlichen Regelarmatur 21, daß heißt in einem Betriebszustand, bei dem keine Störgrößen auf die Verbraucher $V_1$, $V_2$ einwirken, wie folgt:

Bei einer Veränderung der Außentemperatur $T_A$ liefert das Regel- und Steuergerät 7 entsprechend der darin abgelegten Heizkurve ein entsprechendes Stellsignal an die Betriebselektronik 18. Die Betriebselektronik 18 bildet aus den eingespeisten Signalen in Abhängigkeit von den abgespeicherten Gesetzmäßigkeiten der Systemsteuerkennlinie weitere Stellsignale für die Veränderung der Sollwerte der Pumpenförderhöhe und den Drosselstellungen der beiden Stellarmaturen 15, 16. Diese Stellsignale werden an die Sollwerteingabe Eingänge der Pumpe 3.1 und der Antriebe 22, 23 der Stellarmaturen 15, 16 geliefert. Infolgedessen verändert die Pumpenregelung den Istwert der Pumpenförderhöhe so lange, bis er mit dem Sollwert übereinstimmt. Weiterhin verstellen die Stellantriebe 22 der Stellarmaturen 15, 16 die Stellung von deren Drosselorganen entsprechend der Sollwertvorgabe. Bei Stellantrieben 22 mit einem integriertem Stellungsregler sorgt letzterer dafür, daß der Istwert mit dem Sollwert übereinstimmt.

In dem in Fig. 4 dargestellten Leitungssystem 1.4 läuft ein Einreguliervorgang für die Stellarmatur 16 entsprechend Fig. 3. Im Unterschied zur Ausführungsform der Fig. 3 findet nur eine motorisch angetriebene Stellarmatur 16 Verwendung. Im Bypass 10 ist eine federbelastete Rückschlagarmatur 24 und eine Drosselarmatur 25 angeordnet. Beim Einreguliervorgang von $Q_{100}$ wird der Bypass 10 entweder durch manuelles Schließen der Drosselarmatur 25 oder durch einen entsprechend ausgewählten Öffnungsdruck der Rückschlagarmatur 24, oder auch durch den Öffnungsdruck eines - hier nicht dargestellten - Überströmventiles anstelle der Rückschlagarmatur 24, verschlossen. Im Fall der Verwendung von solchen Armaturen innerhalb des Bypasses 10 wird ein Öffnungdruck der einstellbaren Überströmarmatur so weit verstellt, bis die Armatur den Öffnungspunkt erreicht, aber noch nicht öffnet. Die Drosselarmatur 25 muß dabei vollständig geöffnet sein.

Zum Einregulieren des Mindeststromes $Q_{min}$ wird die Stellarmatur 16 geschlossen und bei auf Nennlast bzw. Vollast eingestellten Verbrauchern wird die Drosselarmatur 25 so lange verstellt, bis $Q_{min}$ erreicht ist. Der auf solche Art ermittelte Betriebspunkt entspricht dem Punkt E im Diagramm von der zugehörigen Systemsteuerkennlinie S in der Fig. 11. Die gleiche Volumenreduzierung und eine gleiche Systemsteuerkennlinie S wie bei Leitungssystemen nach Fig. 3 kann realisiert werden, wenn eine Sonderausführung der Rückschlagarmatur 25 Verwendung findet. Je nach Fall kann es daher zweckmäßiger sein, handelsübliche und kostengünstige Ventile zu verwenden und die für das Leitungssystem notwendige Volumenstromreduzierung und die erforderliche Systemsteuerkennlinie an deren Charakteristik anzupassen.

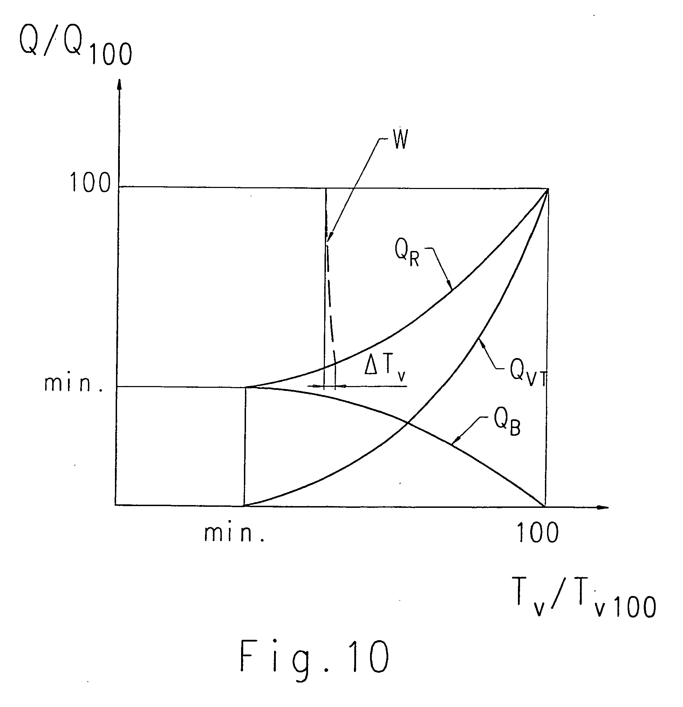

Für ein praktisch ausgeführtes Leitungssystem gemäß Fig. 4 ist die typische Volumenstromreduzierung in dem Diagramm der Fig. 10 dargestellt und die zugehörige typische Systemsteuerkennlinie S im Diagramm der Fig. 11. Der Mindestvolumenstrom $Q_{min}$ und die Mindestpumpenförderhöhe $H_U$ können gegenüber den Diagrammen der Fig. 8 und 9 etwas ansteigen. In praxi würde dies eine etwas geringere Energieeinsparung in Vergleich zu dem in der Fig. 7 und 8 dargestellten Beispiel bedeuten.

Beim Ansprechen des 2. Regelkreises, einer Raumtemperaturregelung, reagieren mit den Verbrauchern $V_1$, $V_2$ zusammenwirkende Regelarmaturen 21 auf individuelle Störgrößen. Die Störgröße kann ein zusätzlicher Wärmeeintrag in den Raum der einzelnen Verbraucher sein. Die Anlage verhält sich dabei wie heutige Anlagen mit drehzahlgeregelten Pumpen. Die Regelarmaturen, zum Beispiel in Form thermostatischer Heizkörperventile, gehen in diesem Fall in Drosselstellung und reduzieren dadurch den Volumenstrom durch die Heizkörper. Die Wärmeleistung wird dadurch dem tatsächlichen Bedarf angepaßt, so dass die Raumtemperatur konstant bleibt.

Die in der Pumpe 3.1, 3.2 integrierte Pumpenregelung reagiert auf diesen Drosselvorgang, je nach verwendeter Pumpenregelkennlinie, indem sie die Pumpenförderhöhe konstant hält oder bei sinkendem Volumenstrom reduziert.

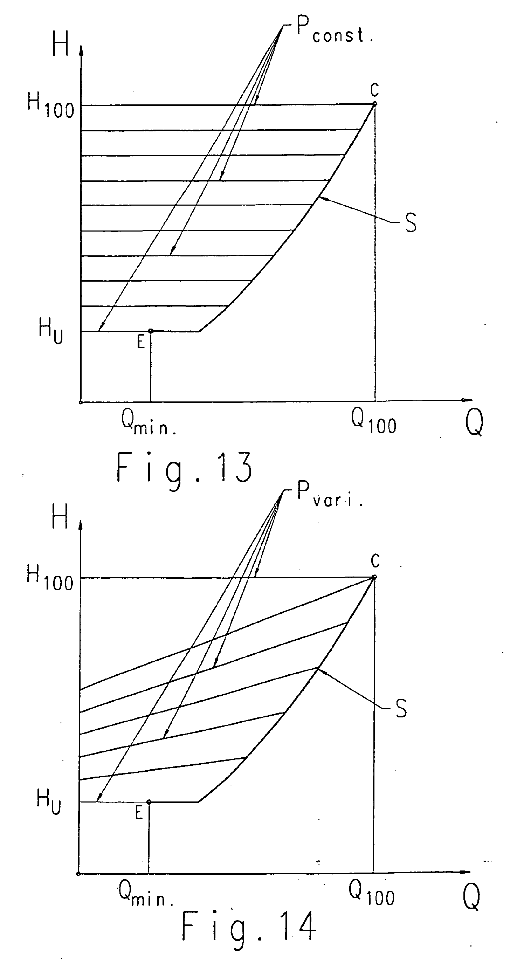

Das aus dem Zusammenwirken der beiden Regelkreise entstehende Q-H-Diagramm der Anlage ist in den Fig. 13 und 14 dargestellt.

Fig. 13 zeigt das Q-H-Diagramm für eine Pumpenregelung mit konstanter Förderhöhe. Durch die Vorlauftemperaturregelung wird der Sollwert der Pumpenförderhöhe und der zugehörige, für die jeweilige Pumpenförderhöhe maximale Volumenstrom entsprechend der Systemsteuerkennlinie S vorgegeben. Beim Ansprechen der Raumtemperaturregelung verändern sich die Betriebspunkte entsprechend der Pumpenregelkennlinie bei konstanter Pumpenförderhöhe.

Fig. 14 zeigt das Q-H-Diagramm für eine Pumpenregelung mit variabler Förderhöhe. Das Verhalten entspricht dem in Fig. 13 beschriebenen. Beim Ansprechen der Raumtemperaturregelung verändern sich hier allerdings die Betriebspunkte entsprechend der Pumpenregelkennlinie mit variabler Pumpenförderhöhe. Neben den dargestellten Pumpenregelkennlinien sind auch andere Kennlinienformen, z.B. mit quadratischem Verlauf usw. möglich.

Verändert sich durch das Ansprechen der Raumtemperaturregelung die Vorlauftemperatur Tv, so wird diese Abweichung vom Regel- oder Steuergerät 7 auf gleiche Weise wie bei heutigen Anlagen korrigiert. Die Abweichung wird vom Vorlauftemperaturfühler 12 erfaßt, das Regel- oder Steuergerät 7 verstellt die Stellarmaturen 15, 16 oder nur 16 so lange, bis die Abweichung beseitigt ist. Die Verstellgesetzmäßigkeit bei diesem Vorgang ist die gleiche, wie bei der Vorlauftemperaturregelung.

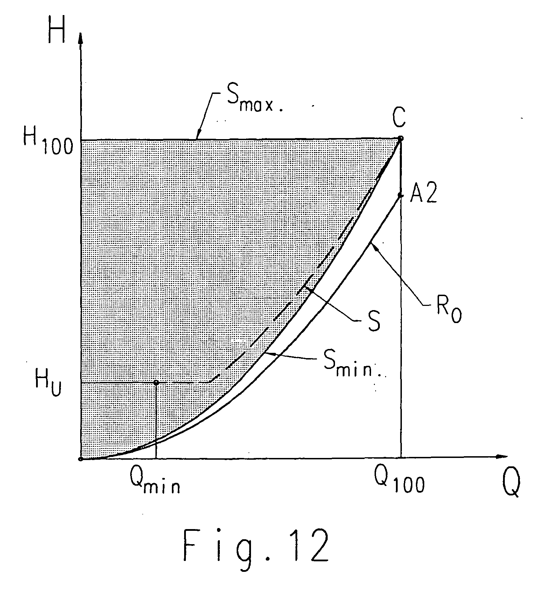

In der Fig. 12 sind im Q-H-Diagramm neben der strichpunktiert dargestellten und praktisch ausgeführten Systemsteuerkennlinie S die minimale Grenz-Systemsteuerkennlinie $GS_{min}$ und die maximale Grenz-Systemsteuerkennlinie $GS_{max}$ dargestellt. In dem davon begrenzten, schattiert dargestellten Diagrammbereich sind verschiedene Verläufe der Systemsteuerkennlinie möglich, wodurch sich vorteilhafte Energieeinsparungen ergeben. Der Verlauf der Systemsteuerkennlinie kann auch ein linearer sein. Für eine minimale Pumpenförderhöhe wird eine Grenz-Systemsteuerkennlinie $S_{min}$ gebildet, die durch die Anlagenkennlinie ohne motorisch angetriebene Stellarmatur plus dem Druckabfall über der motorisch angetriebenen Stellarmatur von der beim Nennvolumenstrom oder Maximalvolumenstrom $Q_{100}$ eingestellten Drosselstellung gebildet ist. Und die zum Nennvolumenstrom oder Maximalvolumenstrom $Q_{100}$ konstant gehaltene Pumpenförderhöhe bildet eine maximale Grenz-Systemsteuerkennlinie $S_{max}$.

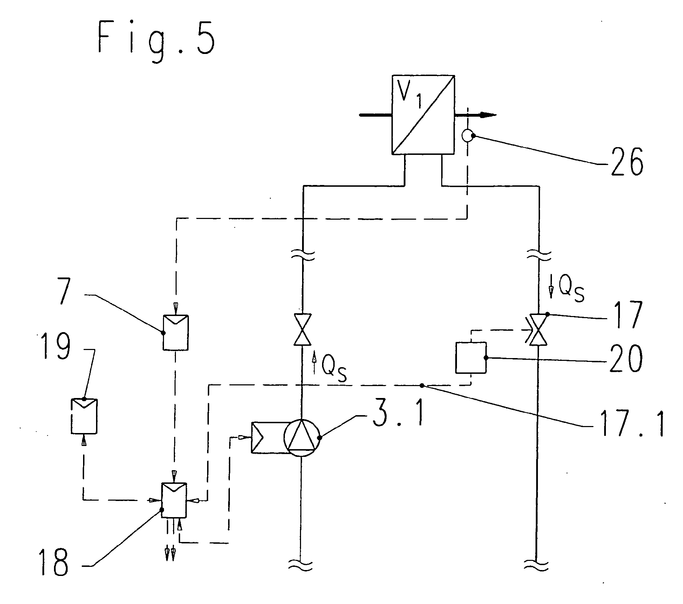

Die Fig. 5 zeigt eine Lösungsmöglichkeit, bei der eine andere Art der Verbraucherregelung stattfindet. Bei einem Verbraucher $V_1$, hier ein Wärmetauscher einer Klimaanlage, wird die Temperatur eines Abluftstromes von einem Sensor 26 erfaßt und in das Regel- oder Steuergerät 7 eingespeist. Dessen Ausgangssignal fließt in die Betriebselektronik 18 und wird dort analog den Ausführungsbeispielen der Fig. 3 und 4 verarbeitet. Anstelle einer Raumtemperaturregelung durch sogenannte Thermostatventile erfolgt hier eine Regelung der Lufttemperatur am Registeraustritt durch das Regel- oder Steuergerät 7. Ansonsten besteht Übereinstimmung hinsichtlich der Abläufe. Auf die Darstellung der Luftmengenregelung wurde verzichtet.

Bezugszeichenliste zu Fig. 1 - 5

| | |
|---|---|
| 1 | Leitungssystem |
| 1.3 | Leitungssystem von Fig. 3 |
| 1.4 | Leitungssystem von Fig. 4 |
| 2 | 3-Wege-Stellarmatur |
| 3 | Pumpe |
| 3.1 - 3.x | drehzahlregelbare Pumpe |
| 4.0 - 4.x | Anschlüsse an VT, SA |
| 5 | Zulaufleitung |
| 6 | Rücklaufleitung |
| 7 | Regel- oder Steuergerät |
| 8 | Strangregulierventil |
| 9 | Rücklauf |
| 10 | Bypass |
| 11 | Vorlauf |
| 12 | Temperaturfühler |
| 13 | Stellarmatur |
| 14 | Rückschlagarmatur |
| 15 | motorisch angetriebene Stellarmatur |
| 16 | motorisch angetriebene Stellarmatur |
| 17 | Volumenstrommeßeinheit |
| 17.1 | Volumenstromsignal |
| 18 | Betriebselektronik |
| 19 | Initialisierungseinheit |
| 20 | Auswerteeinheit |
| 21 | Regelarmaturen |
| 22 | Stellantriebe |
| 23 | Stellantriebe |
| 24 | Rückschlagarmatur |
| 25 | Drosselarmatur |
| 26 | Sensor |

| | |
|---|---|
| VT = | Vorlaufverteiler |
| SA = | Rücklaufsammler |
| $V_{1-x}$ = | Verbraucher 1 bis x |
| $Q_S$ = | Volumenstrom des Leitungssystems |
| $Q_{VT}$ = | Volumenstrom aus dem Vorlaufverteiler |
| $Q_B$ = | Volumenstrom im Bypass |
| $T_V$ = | Vorlauftemperatur |
| $T_R$ = | Rücklauftemperatur |
| $P_{const.}$ = | Pumpenregelkennlinie mit konstanter Förderhöhe |
| $P_{vari.}$ = | Pumpenregelkennlinie mit variabler Förderhöhe |

Diagrammzeichenliste zu Fig. 6 - 14

| | |
|---|---|
| a = | Autorität |
| A1 = | Betriebspunkt der Pumpe bei voll geöffneter Stellarmatur 16 auf Anlagenkennlinie $R_1$ bei Förderhöhe $H_{A1\ 100}$ |
| A2 = | Rechnerisch ermittelter Punkt bei $Q_{100}$ und $H_{A2\ 100}$ auf Anlagenkennlinie $R_0$ |

| | | |
|---|---|---|
| $B$ = | Betriebspunkt der Pumpe bei voll geöffneter Stellarmatur 16 auf Anlagenkennlinie $R_1$ bei Förderhöhe $H_{100}$ bei |
| $C$ = | Betriebspunkt der Pumpe bei Förderhöhe $H_{A1\ 100}$ und $H_{100}$ auf Anlagenkennlinie $R_0$ |
| $D$ = | Betriebspunkt bei minimaler Pumpendrehzahl auf Anlagenkennlinie $R_1$ mit geöffneter Stellarmatur 15 |
| $E$ = | Betriebspunkt der Pumpe bei Punkt bei $Q_{min}$ und $H_0$ |
| $S_{max}$ = | maximale Grenz-Systemsteuerkennlinie |
| $S_{min}$ = | minimale Grenz-Systemsteuerkennlinie |
| $H_U$ = | minimale Pumpenförderhöhe bei $Q_{min}$ |
| $H_{100}$ = | erforderliche Pumpenförderhöhe bei $Q_{100}$ |
| $H_{A1\ 100}$= | Druckverlust des Leitungssystems mit Stellarmatur bei $Q_{100}$ |
| $H_{A2100}$ = | Druckverlust des Leitungssystems ohne Stellarmatur bei $Q_{100}$ |
| $H_U$ = | Druckabbau über Stellarmatur |
| $K_V$ = | Durchflußkoeffizient einer Stellarmatur |
| $n_{max.}$ = | maximale Pumpendrehzahl |
| $n_{min.}$ = | minimale Pumpendrehzahl |
| $P_{const.}$ = | Pumpenregelkennlinien für H = constant |
| $P_{vari.}$ = | Pumpenregelkennlinien für H = variabel |
| $Q_{100}$ = | Nennvolumenstrom oder Maximalvolumenstrom des Leitungssystems |
| $Q_B$ = | Volumenstrom im Bypass |
| $Q_{max}$ = | maximaler Gesamt- Volumenstrom des Leitungssystems |
| $Q_R$ = | reduzierter Volumenstrom des Leitungssystems |
| $Q_X$ = | maximaler Volumenstrom bei Pumpenförderhöhe $H_0$ |
| $Q_{VT}$ = | Volumenstrom aus Vorlaufverteiler |
| $R_0$ = | rechnerisch ermittelte Anlagenkennlinie ohne Stellarmatur |
| $R_1$ = | Anlagenkennlinie mit voll geöffneter Stellarmatur |
| $R_A$ = | Anlagenkennlinie mit Stellarmatur im einregulierten Zustand |
| $S$ = | Systemsteuerkennlinie |
| $T_A$ = | Außentemperatur |
| $T_R$ = | Rücklauftemperatur |
| $T_{RT}$ = | Raumtemperatur |
| $T_V$ = | Vorlauftemperatur |
| $T_{VT}$ = | Temperatur im Vorlaufverteiler |
| $\Delta T$ = | Temperaturspreizung = $T_V$ - $T_R$ |
| $\Delta T_R$ = | Rücklauftemperaturabsenkung |
| $\Delta T_V$ = | Vorlauftemperaturanhebung |
| $W$ = | Linie konstanter Wärmeleitung |

Formelzeichenliste

| | | |
|---|---|---|
| $T_A$ = | Außentemperatur |
| $T_V$ = | Vorlauftemperatur |
| $Q$ = | Volumenstrom |

| | | |
|---|---|---|
| $Q_{VT}$ = | Volumenstrom aus Vorlaufverteiler |
| $Q_B$ = | Volumenstrom im Bypass |
| $\Delta T_V$ = | Vorlauftemperaturanhebung |
| $T_R$ = | Rücklauftemperatur |
| $Q_{100}$ = | Nennvolumenstrom oder Maximalvolumenstrom |
| $H_{100}$ = | erforderliche Pumpenförderhöhe bei $Q_{100}$ |
| $a$ = | Autorität der Stellarmatur |
| $v_{100}$ = | Strömungsgeschwindigkeit in Bezug auf Nennweite der Stellarmatur |
| $T_R$ = | Raumtemperatur |
| $\Delta T_R$ = | Rücklauftemperaturabsenkung |
| $\zeta$ = | Widerstandsbeiwert der Stellarmatur bei Offenstellung |

**Patentansprüche**

1. Leitungssystem zur thermischen Energieübertragung unter Verwendung eines flüssigen Fluid, mindestens enthaltend eine drehzahlgeregelte Pumpe (3) und einen Verbraucher ($V_1$,$V_2$), wobei zwischen einer Vorlaufleitung (1) zum Verbraucher und einer Rücklaufleitung (5) vom Verbraucher im Leitungssystem eine Bypassleitung (10) angeordnet ist, durch die Bypassleitung im Leitungssystem eine Beeinflussung einer Vorlauftemperatur mittels Fluidbeimischung erfolgt, mindestens eine Stellarmatur im Leitungssystem angeordnet ist und ein Stellsignal eines Regel- oder Steuergerätes (7) die Drosselstellung der Stellarmatur verändert, **dadurch gekennzeichnet, daß** das Stellsignal und/oder ein Vorlauftemperatur-Sollwert des Regel- oder Steuergerätes (7) in eine Betriebselektronik (18) einfließt, daß die Betriebselektronik (18) in Abhängigkeit vom Stellsignal oder dem Vorlauftemperatur-Sollwert des Regel- oder Steuergeräts (7) Stellsignale für die Förderhöhe der drehzahlgeregelten Pumpe (3.1, 3.2) und für die Drosselstellung von mindestens einer motorisch angetriebenen Stellarmatur (15, 16) erzeugt und daß die Betriebselektronik (18) ihre Stellsignale nach hinterlegten anlagenspezifischen Gesetzmäßigkeiten erzeugt.

2. Leitungssystem nach dem Oberbegriff von Anspruch 1, **dadurch gekennzeichnet, daß** das Stellsignal des Regel- oder Steuergerätes (7) und ein Vorlauftemperatur-Istwert in eine Betriebselektronik (18) einfließt, daß die Betriebselektronik (18) in Abhängigkeit vom Stellsignal oder dem Vorlauftemperatur-Sollwert des Regel-oder Steuergeräts (7) Stellsignale für die Förderhöhe der drehzahlgeregelten Pumpe (3.1, 3.2) und für die Drosselstellung von mindestens einer motorisch angetriebenen Stellarmatur (15, 16) erzeugt und daß die Betriebselektronik (18) ihre Stellsignale nach hinterlegten anlagenspezifischen Gesetzmäßigkeiten erzeugt.

**3.** Leitungssystem nach Anspruch 1 oder 2, **dadurch gekennzeichnet, daß** aus dem Stellsignal des Regel- oder Steuergerätes (7) das Stellsignal von mindestens einer motorisch angetriebenen Stellarmatur (15, 16) und daß aus dem Vorlauftemperatur-Sollwert oder aus dem Vorlauftemperatur-Istwert das Stellsignal für die drehzahlgeregelte Pumpe (3.1, 3.2) abgeleitet werden.

**4.** Leitungssystem nach Anspruch 1, 2 oder 3, **dadurch gekennzeichnet, daß** als anlagenspezifische Gesetzmäßigkeit eine Volumenstromreduzierung bedingende Systemsteuerkennlinie (S) hinterlegt ist.

**5.** Leitungssystem nach Anspruch 4, **dadurch gekennzeichnet, daß** die Systemsteuerkennlinie (S) die Zuordnung zwischen der Drosselstellung der motorisch angetriebenen Stellarmaturen(15, 16)und der zugehörigen Pumpenförderhöhe bildet.

**6.** Leitungssystem nach einem der Ansprüche 1 bis 5, **dadurch gekennzeichnet, daß** die Systemsteuerkennlinie (S) ein Linienzug aller Betriebspunkte des Leitungssystems (13, 14) und ohne auf die Verbraucher ($V_1$, $V_2$) einwirkende Störgrößen ist.

**7.** Leitungssystem nach einem der Ansprüche 1 bis 6, **dadurch gekennzeichnet, daß** eine Anlagenkennlinie ($R_0$) ohne motorisch angetriebene Stellarmatur plus dem Druckabfall über der motorisch angetriebenen Stellarmatur (16) von der beim Nennvolumenstrom oder Maximalvolumenstrom ($Q_{100}$) eingestellten Drosselstellung eine minimale Grenz-Systemsteuerkennlinie ($S_{min}$) bildet.

**8.** Leitungssystem nach einem der Ansprüche 1 bis 7, **dadurch gekennzeichnet, daß** die zum Nennvolumenstrom oder Maximalvolumenstrom ($Q_{100}$) zugehörige konstant gehaltene Pumpenförderhöhe ($H_{100}$) eine maximale Grenz-Systemsteuerkennlinie ($S_{max}$)bildet.

**9.** Leitungssystem nach einem der Ansprüche 1 bis 8, **dadurch gekennzeichnet, daß** die Systemsteuerkennlinie S zwischen zwei Grenz-Systemsteuerkennlinien ($S_{min}$, $S_{max}$) verläuft und abhängig ist von den physikalischen Möglichkeiten der drehzahlgeregelten Pumpe (3.1, 3.2), wie minimale Drehzahl, minimale Pumpenförderhöhe, günstiger Pumpenwirkungsgrad usw. sowie von den jeweiligen anlagenspezifischen Randbedingungen, wie beispielsweise Mindestmenge oder Mindestdrücke.

**10.** Leitungssystem nach einem der Ansprüche 1 bis 9, **dadurch gekennzeichnet, daß** die übertragbare Wärmemenge bei einer gezielten Volumenstromreduzierung durch eine kontrollierte Anhebung der Temperaturspreizung zwischen Vorlauf (11) und Rücklauf (9) annähernd gleich bleibt.

**11.** Leitungssystem nach einem der Ansprüche 1 bis 8, **dadurch gekennzeichnet, daß** bei einer Inbetriebnahme eine Initialisierungseinheit (19) in Abhängigkeit von eingespeisten Volumenstromsignalen, zugehörigen Pumpenförderhöhen und einem Punkt (A1) einer Anlagenkennlinie ($R_1$) bei voll geöffneter Stellarmatur (16) sowie in Abhängigkeit von hinterlegten anlagenspezifischen Gesetzmäßigkeiten die Systemsteuerkennlinie (S) generiert.

**12.** Leitungssystem nach einem der Ansprüche 1 bis 11, **dadurch gekennzeichnet, daß** die Funktionalitäten von Regel- oder Steuergerät (7), Betriebselektronik (18), Initialisierungseinheit (19) und Auswerteelektronik (20) als ein oder mehrere Hardware- und/oder Softwarekomponenten ausgebildet sind und in vorhandene Komponenten ganz oder teilweise integriert sind.

**13.** Leitungssystem nach einem der Ansprüche 1 bis 11, **dadurch gekennzeichnet, daß** die Funktionalitäten von Regel- oder Steuergerät (7), Betriebselektronik (18), Initialisierungseinheit (19) und Auswerteelektronik (20) als einzelne Einheiten, in Kombination miteinander und/oder mit anderen Komponenten des Leitungssystems, als Baueinheit in Form eines eigenständigen Gerätes oder als Funktionseinheit in einem übergeordneten Regel- oder Steuersystem ausgeführt sind.

**14.** Leitungssystem nach Anspruch 9 oder 10, **dadurch gekennzeichnet, daß** die Initialisierungseinheit (19) als ein mobiles und mit der Betriebselektronik (18) temporär zu verbindendes Bauteil ausgebildet ist.

**15.** Leitungssystem nach Anspruch 9, 10 oder 11, **dadurch gekennzeichnet, daß** die Verbindung zwischen Betriebselektronik (18) und Initialisierungseinheit (19) über Leitungen, Kabel und/oder durch Sende- und Empfangsanlagen erfolgt.

**16.** Leitungssystem nach einem der Ansprüche 1 bis 12, **dadurch gekennzeichnet, daß** der Bypass (10) mit den darin angeordneten Armaturen gegenüber dem Vorlauf (11) oder Rücklauf (12) einen um bis zu drei Nennweiten kleineren Querschnitt aufweist.

**17.** Verfahren zur Regelung oder Steuerung des Volumenstromes in einem Leitungssystem mit einem Bypass zwischen Vorlauf und Rücklauf, insbesondere in einem Heizungs- oder Kühlsystem, wobei im Rahmen einer Inbetriebnahme eine Einregulierung des Leitungssystems und der darin angeordneten Verbraucher auf einen benötigten Volumenstrom oder Wärmeleistung erfolgt, und wobei ein Regel- oder Steuergerät mit einem Stellsignal die Drosselstellung einer Stellarmatur für eine Beeinflussung einer Vorlauftemperatur im Volumenstrom verändert, **dadurch gekennzeichnet, daß** während eines Einstellvorganges die Eckpunkte von der Sollförderhöhe der drehzahlgeregelten Pumpe mit den zugehörigen Drosselstellungen der Stellarmatur sowie ein Punkt (A2) der Anlagenkennlinie ($R_0$) ohne Stellarmaturen ermittelt werden und daß aus den Eckpunkten (C, E) und dem Punkt (A2) der Verlauf der Sollförderhöhe der Pumpe und der Drosselstellung der Stellarmatur gebildet wird, daß das vom Regel- oder Steuergerät (7) erzeugte Signal durch eine Betriebselektronik (18) in mehrere Stellsignale für eine drehzahlregelbare Pumpe (3.1, 3.2) und für ein oder mehrere Stellarmaturen (15, 16) umgewandelt wird, daß die in der Betriebselektronik (18) abgelegte Verstellgesetzmäßigkeit der umgewandelten Stellsignale für Pumpenförderhöhe und Drosselstellung der Stellarmatur abgeleitet wird aus einer vorgegebenen Abhängigkeit der Volumenstromreduzierung vom Signal der Vorlauftemperatur oder vom Stellsignal des Regel- oder Steuergerätes.

18. Verfahren nach Anspruch 17, **dadurch gekennzeichnet, daß** bei einer Volumenstromveränderung im Leitungssystem die Pumpenförderhöhe an den veränderten Rohrleitungswiderstand angepaßt wird.

19. Verfahren nach Anspruch 17 oder 18, **dadurch gekennzeichnet, daß** für eine Ermittlung der Stellsignale für die Pumpe und für die Stellarmaturen ein die tatsächliche Größe des im Leitungssystem zirkulierenden Volumenstrom darstellendes Signal in die Betriebselektronik eingespeist wird.

20. Verfahren nach einem der Ansprüche 17 bis 19, **dadurch gekennzeichnet, daß** die Eingabe der jeweiligen Gesetzmäßigkeit eines Leitungssystems für die Verstellung von Pumpenförderhöhe und Drosselstellung der Stellarmatur in die Betriebselektronik durch eine Initialisierungseinheit, manuelle Bedienelemente, Computerelemente, Datenleitungen oder auf drahtlosem Übertragungsweg erfolgt.

21. Verfahren nach einem der Ansprüche 17 bis 20, **dadurch gekennzeichnet, daß** ein Regelalgorithmus in allen Betriebspunkten der Systemsteuerkennlinie (S) das Überschreiten des maximal möglichen Volumenstromes ($Q_{100}$) verhindert.

## Claims

1. Pipe system for thermal energy exchange using a liquid fluid, the pipe system at least containing a speed-regulated pump (3) and a consumer ($V_1$, $V_2$), with a bypass line (10) being arranged in the pipe system between a forward-flow line (1) to the consumer and a return line (5) from the consumer, by means of which bypass line in the line system a forward-flow temperature is influenced by means of addition of a fluid, and at least one adjustment valve is arranged in the pipe system and an adjustment signal of a regulating or control unit (7) changes the throttling position of the adjustment valve, **characterized in that** the adjustment signal and/or a forward-flow-temperature desired value of the regulating or control unit (7) flow/flows into an electronic operating system (18), **in that**, as a function of the adjustment signal or the forward-flow-temperature desired value of the regulating or control unit (7), the electronic operating system (18) generates adjustment signals for the delivery head of the speed-regulated pump (3.1, 3.2) and for the throttling position of at least one motor-driven adjustment valve (15, 16), and **in that** the electronic operating system (18) generates its adjustment signals in accordance with stored system-specific regularities.

2. Pipe system according to the precharacterizing clause of Claim 1, **characterized in that** the adjustment signal of the regulating or control unit (7) and a forward-flow-temperature actual value flow into an electronic operating system (18), **in that**, as a function of the adjustment signal or the forward-flow-temperature desired value of the regulating or control unit (7), the electronic operating system (18) generates adjustment signals for the delivery head of the speed-controlled pump (3.1, 3.2) and for the throttling position of at least one motor-driven adjustment valve (15, 16), and **in that** the electronic operating system (18) generates its adjustment signals in accordance with stored system-specific regularities.

3. Pipe system according to Claim 1 or 2, **characterized in that** the adjustment signal of at least one motor-driven adjustment valve (15, 16) is derived from the adjustment signal of the regulating or control unit (7), and the adjustment signal for the speed-regulated pump (3.1, 3.2) is derived from the forward-flow-temperature desired value or from the forward-flow-temperature actual value.

4. Pipe system according to Claim 1, 2 or 3, **characterized in that** a system control characteristic (S) causing a reduction in volumetric flow is stored as a system-specific regularity.

5. Pipe system according to Claim 4, **characterized in that** the system control characteristic (S) forms the correspondence between the throttling position of the motor-driven adjustment valves (15, 16) and the associated pump delivery head.

**6.** Pipe system according to one of Claims 1 to 5, **characterized in that** the system control characteristic (S) is a continuous line of all of the operating points of the pipe system (13, 14) and without disturbance variables acting on the consumers ($V_1$, $V_2$).

**7.** Pipe system according to one of Claims 1 to 6, **characterized in that** a system characteristic ($R_0$) without the motor-driven adjustment valve plus the pressure drop via the motor-driven adjustment valve (16) from the throttling position set at the nominal volumetric flow or maximum volumetric flow ($Q_{100}$) forms a minimum limit system control characteristic ($S_{min}$).

**8.** Pipe system according to one of Claims 1 to 7, **characterized in that** the pump delivery head ($H_{100}$) which is associated with the nominal volumetric flow or maximum volumetric flow ($Q_{100}$) and is kept constant forms a maximum limit system control characteristic ($S_{max}$).

**9.** Pipe system according to one of Claims 1 to 8, **characterized in that** the system control characteristic S runs between two limit system control characteristics ($S_{min}$, $S_{max}$) and is dependent on the physical possibilities of the speed-regulated pump (3.1, 3.2), such as minimum speed, minimum pump delivery head, favourable pump efficiency, etc., and on the respective system-specific boundary conditions, such as, for example, minimum quantity or minimum pressures.

**10.** Pipe system according to one of Claims 1 to 9, **characterized in that**, when there is a specific reduction in volumetric flow, the transmittable quantity of heat remains approximately the same because of a controlled raising of the temperature spread between forward flow (11) and return (9).

**11.** Pipe system according to one of Claims 1 to 8, **characterized in that**, upon commissioning, an initialization unit (19) generates the system control characteristic (S) as a function of volumetric flow signals fed in, associated pump delivery heads and a point (A1) of a system characteristic ($R_1$) when the adjustment valve (16) is completely open, and as a function of stored system-specific regularities.

**12.** Pipe system according to one of Claims 1 to 11, **characterized in that** the functionalities of regulating or control unit (7), electronic operating system (18), initialization unit (19) and electronic evaluation system (20) are designed as one or more hardware and/or software components and are entirely or partially integrated into existing components.

**13.** Pipe system according to one of Claims 1 to 11, **characterized in that** the functionalities of regulating or control unit (7), electronic operating system (18), initialization unit (19) and electronic evaluation system (20) are designed as individual units, in combination with one another and/or with other components of the pipe system, as a constructional unit in the form of an independent unit or as a functional unit in a master regulating or control system.

**14.** Pipe system according to Claim 9 or 10, **characterized in that** the initialization unit (19) is designed as a mobile component to be temporarily connected to the electronic operating system (18).

**15.** Pipe system according to Claim 9, 10 or 11, **characterized in that** the connection between electronic operating system (18) and initialization unit (19) takes place via lines, cables and/or by transmitting and receiving systems.

**16.** Pipe system according to one of Claims 1 to 12, **characterized in that** the bypass (10) with the valves arranged therein has a cross section which is up to three nominal widths smaller than the forward flow (11) or return (12).

**17.** Method for regulating or controlling the volumetric flow in a pipe system with a bypass between forward flow and return, in particular in a heating or cooling system, with adjustment of the pipe system and of the consumers arranged therein to a required volumetric flow or thermal output taking place within the scope of a commissioning operation, and with a regulating or control unit using an adjustment signal to change the throttling position of an adjustment valve in order to influence a forward-flow temperature in the volumetric flow, **characterized in that**, during a setting operation, the corner points of the desired delivery head of the speed-regulated pump with the associated throttling points of the adjustment valve and a point (A2) of the system characteristic ($R_0$) without adjustment valves are determined, and **in that** the profile of the desired delivery head of the pump and of the throttling position of the adjustment valve is formed from the corner points (C, E) and the point (A2), **in that** the signal generated by the regulating or control unit (7) is converted by an electronic operating system (18) into a plurality of adjustment signals for a speed-regulatable pump (3.1, 3.2) and for one or more adjustment valves (15, 16), **in that** the adjustment regularity, which is stored in the electronic operating system (18), of the converted adjustment signals for the pump delivery head and throttling position of the adjustment valve is derived from a predefined dependence of the reduction in the volumetric flow on the signal of the forward-flow temperature or on the adjustment signal of the regulating or control unit.

**18.** Method according to Claim 17, **characterized in that**, when there is a change in volumetric flow in the pipe system, the pump delivery head is matched to the changed pipeline resistance.

**19.** Method according to Claim 17 or 18, **characterized in that**, to determine the adjustment signals for the pump and for the adjustment valves, a signal constituting the actual variable of the volumetric flow circulating in the pipe system is fed into the electronic operating system.

**20.** Method according to one of Claims 17 to 19, **characterized in that** the inputting of the particular regularity of a pipe system for the adjustment of the pump delivery head and throttling position of the adjustment valve into the electronic operating system takes place by means of an initialization unit, manual operating elements, computer elements, data lines or on a wireless transmission path.

**21.** Method according to one of Claims 17 to 20, **characterized in that** a regulating algorithm prevents the maximum possible volumetric flow ($Q_{100}$) from being exceeded in all operating points of the system control characteristic (S).

**Revendications**

**1.** Système de tuyauterie pour l'échange d'énergie thermique utilisant un fluide liquide, comportant au moins une pompe à vitesse régulée (3) et un consommateur ($V_1$, $V_2$), une conduite de dérivation (10) étant disposée dans le système de tuyauterie entre une conduite de départ (1) allant au consommateur et une conduite de retour (9) venant du consommateur, la conduite de dérivation influençant une température de départ dans le système de tuyauterie au moyen de l'ajout de fluide, au moins une vanne de réglage étant disposée dans le système de tuyauterie et un signal de réglage d'un appareil de régulation ou de commande (7) modifiant la position d'étranglement de la vanne de réglage, **caractérisé en ce que** le signal de réglage et/ou une valeur de consigne de la température de départ de l'appareil de régulation ou de commande (7) est fourni à une électronique de commande (18), **en ce que** l'électronique de commande (18) génère des signaux de réglage pour la hauteur de refoulement de la pompe à vitesse régulée (3.1, 3.2) et pour la position d'étranglement d'au moins une vanne de réglage motorisée (15, 16) en fonction du signal de réglage ou de la valeur de consigne de la température de départ de l'appareil de régulation ou de commande (7), et **en ce que** l'électronique de commande (18) génère ses signaux de réglage selon des règles mémorisées spécifiques à l'installation.

**2.** Système de tuyauterie selon le préambule de la revendication 1, **caractérisé en ce que** le signal de réglage de l'appareil de régulation ou de commande (7) et une valeur réelle de la température de départ sont fournies à une électronique de commande (18), **en ce que** l'électronique de commande (18) génère des signaux de réglage pour la hauteur de refoulement de la pompe à vitesse régulée (3.1, 3.2) et pour la position d'étranglement d'au moins une vanne de réglage motorisée (15, 16) en fonction du signal de réglage ou de la valeur de consigne de la température de départ de l'appareil de régulation ou de commande (7), et **en ce que** l'électronique de commande (18) génère ses signaux de réglage selon des règles mémorisées spécifiques à l'installation.

**3.** Système de tuyauterie selon la revendication 1 ou 2, **caractérisé en ce que** le signal de réglage d'au moins une vanne de réglage motorisée (15, 16) est dérivé du signal de réglage de l'appareil de régulation ou de commande (7) et **en ce que** le signal de réglage pour la pompe à vitesse régulée (3.1, 3.2) est dérivé de la valeur de consigne de la température de départ ou de la valeur réelle de la température de départ.

**4.** Système de tuyauterie selon la revendication 1, 2 ou 3, **caractérisé en ce que** la règle spécifique à l'installation est mémorisée sous le forme d'une courbe caractéristique de commande du système (S) conditionnant une réduction du débit volumique.

**5.** Système de tuyauterie selon la revendication 4, **caractérisé en ce que** la courbe caractéristique de commande du système (S) réalise la coordination entre la position d'étranglement de la vanne de réglage motorisée (15, 16) et la hauteur de refoulement correspondante de la pompe.

**6.** Système de tuyauterie selon l'une des revendications 1 à 5, **caractérisé en ce que** la courbe caractéristique de commande du système (S) est une ligne brisée de tous les points de fonctionnement du système de tuyauterie (13, 14) sans les grandeurs de perturbation affectant les consommateurs ($V_1$, $V_2$).

**7.** Système de tuyauterie selon l'une des revendications 1 à 6, **caractérisé en ce qu'**une courbe caractéristique de l'installation ($R_0$) sans vanne de réglage motorisée, plus la chute de pression due à la vanne de réglage motorisée (16) réglée à la position d'étranglement du débit volumique nominal ou du débit volumique maximal ($Q_{100}$), constitue une courbe caractéristique limite minimale de commande du système ($S_{min}$).

**8.** Système de tuyauterie selon l'une des revendications 1 à 7, **caractérisé en ce que** la hauteur de refoulement de la pompe ($H_{100}$) maintenue constante et associée au débit volumique nominal ou au débit volumique maximal ($Q_{100}$) constitue une courbe caractéristique limite maximale de commande du système ($S_{max}$).

9. Système de tuyauterie selon l'une des revendications 1 à 8, **caractérisé en ce que** la courbe caractéristique de commande du système (S) s'étend entre deux courbes caractéristiques limites de commande du système ($S_{min}$, $S_{max}$) et dépend des possibilités physiques de la pompe à vitesse régulée (3.1, 3.2) comme la vitesse de rotation minimale, la hauteur de refoulement minimale, le rendement favorable de la pompe, etc., ainsi que des conditions aux limites spécifiques à chaque installation, comme par exemple la quantité minimale ou les pressions minimales.

10. Système de tuyauterie selon l'une des revendications 1 à 9, **caractérisé en ce que** la quantité de chaleur pouvant être échangée reste approximativement identique dans le cas d'une réduction ciblée du débit volumique par une augmentation contrôlée de l'écart de température entre le départ (11) et le retour (9).

11. Système de tuyauterie selon l'une des revendications 1 à 8, **caractérisé en ce que**, lors d'une mise en route, une unité d'initialisation (19) génère la courbe caractéristique de commande du système (S) en fonction des signaux de débit volumique fournis, des hauteurs associées de refoulement de la pompe, et d'un point (A1) d'une courbe caractéristique ($R_1$) de l'installation, lorsque la vanne de réglage (16) est entièrement ouverte, ainsi qu'en fonction de règles mémorisées spécifiques à l'installation.

12. Système de tuyauterie selon l'une des revendications 1 à 11, **caractérisé en ce que** les fonctionnalités de l'appareil de régulation ou de commande (7), de l'électronique de commande (18), de l'unité d'initialisation (19) et de l'électronique d'exploitation (20) sont réalisées sous la forme d'un ou de plusieurs composants matériel et/ou logiciel et sont intégrés en totalité ou en partie dans des composants existants.

13. Système de tuyauterie selon l'une des revendications 1 à 11, **caractérisé en ce que** les fonctionnalités de l'appareil de régulation ou de commande (7), de l'électronique de commande (18), de l'unité d'initialisation (19) et de l'électronique d'exploitation (20) sont réalisées en tant qu'unités individuelles, en combinaison les unes avec les autres et/ou avec d'autres composants du système de tuyauterie, comme un sous-ensemble sous la forme d'un appareil indépendant ou comme une unité fonctionnelle dans un système de régulation ou de commande de niveau supérieur.

14. Système de tuyauterie selon la revendication 9 ou 10, **caractérisé en ce que** l'unité d'initialisation (19) est réalisé sous la forme d'un sous-ensemble mobile à relier temporairement à l'électronique de commande (18).

15. Système de tuyauterie selon la revendication 9, 10 ou 11, **caractérisé en ce que** la liaison entre l'électronique de commande (18) et l'unité d'initialisation (19) est réalisée au moyen de conducteurs, de câbles et/ou d'installations d'émission et de réception.

16. Système de tuyauterie selon l'une des revendications 1 à 12, **caractérisé en ce que** la dérivation (10), avec les équipements disposés sur celle-ci, a une section inférieure aux sections du départ (11) ou du retour (12) de jusqu'à trois tailles nominales.

17. Procédé de régulation ou de commande du débit volumique dans un système de tuyauterie avec une dérivation entre le départ et le retour, notamment dans un système de chauffage ou de refroidissement, une régulation initiale du système de tuyauterie et des consommateurs disposés sur celui-ci pour un débit volumique requis ou pour une puissance calorifique requise ayant lieu dans le cadre d'une mise en route, et un appareil de régulation ou de commande modifiant, à l'aide d'un signal de réglage, la position d'étranglement d'une vanne de réglage pour influencer une température de départ dans le débit volumique, **caractérisé en ce que**, pendant une opération de réglage, les points d'angle de la hauteur de refoulement de consigne de la pompe à vitesse régulée, avec les positions d'étranglement associées de la vanne de réglage, ainsi qu'un point (A2) de la courbe caractéristique de l'installation ($R_0$) sans vannes de réglage sont déterminés, et **en ce que** le tracé de la hauteur de refoulement de consigne de la pompe et de la position d'étranglement de la vanne de réglage est formé à partir des points d'angle (C, E) et du point (A2), **en ce que** le signal généré par l'appareil de régulation ou de commande (7) est converti par une électronique de commande (18) en plusieurs signaux de réglage pour une pompe à vitesse régulée (3.1, 3.2) et pour une ou plusieurs vannes de réglage (15, 16), **en ce que** la règle d'ajustement des signaux de réglage convertis pour la hauteur de refoulement de la pompe et la position d'étranglement de la vanne de réglage, mémorisée dans l'électronique de commande (18), est dérivée d'une relation imposée de la réduction du débit volumique par rapport au signal de la température de départ ou au signal de réglage de l'appareil de régulation ou de commande.

**18.** Procédé selon la revendication 17, **caractérisé en ce que**, dans le cas d'une modification du débit volumique dans le système de tuyauterie, la hauteur de refoulement de la pompe est adaptée à la résistance modifiée de la tuyauterie.

**19.** Procédé selon la revendication 17 ou 18, **caractérisé en ce que**, pour une détermination des signaux de réglage pour la pompe et pour les vannes de réglage, un signal représentant la grandeur réelle du débit volumique circulant dans le système de tuyauterie est fourni à l'électronique de commande.

**20.** Procédé selon l'une des revendications 17 à 19, **caractérisé en ce que** l'introduction dans l'électronique de commande de la règle, spécifique à chaque système de tuyauterie, gérant le réglage de la hauteur de refoulement de la pompe et de la position d'étranglement de la vanne de réglage, s'effectue au moyen d'une unité d'initialisation, d'organes de commande manuels, d'éléments informatisés, de lignes de données ou au moyen d'une transmission sans fil.

**21.** Procédé selon l'une des revendications 17 à 20, **caractérisé en ce qu'**un algorithme de régulation empêche le dépassement du débit volumique maximal possible ($Q_{100}$) en tous les points de fonctionnement de la courbe caractéristique de commande du système (S).

# Fig.1

# Fig.2

# Fig.3

Fig.4

# Fig.5

Fig.6

Fig.7

Fig.8

Fig.9

Fig. 10

Fig.11

Fig.12

Fig. 13

Fig. 14